Europäisches Patentamt

European Patent Office

Office européen des brevets

(19)

(11) **EP 0 457 909 B1**

(12) **EUROPEAN PATENT SPECIFICATION**

(45) Date of publication and mention
of the grant of the patent:
**22.10.1997   Bulletin 1997/43**

(21) Application number: **90906368.7**

(22) Date of filing: **25.04.1990**

(51) Int Cl.6: **G06T 7/00**, G06F 15/18,
G06F 15/80

(86) International application number:
**PCT/JP90/00535**

(87) International publication number:
**WO 90/13874 (15.11.1990 Gazette 1990/26)**

(54) **DATA PROCESSING SYSTEM**

DATENBEHANDLUNGSSYSTEM

SYSTEME DE TRAITEMENT DE DONNEES

(84) Designated Contracting States:
**AT BE CH DE DK ES FR GB IT LI LU NL SE**

(30) Priority: 06.05.1989  JP  112818/89
06.05.1989  JP  112819/89
06.05.1989  JP  112820/89
06.05.1989  JP  112821/89
16.05.1989  JP  120249/89
16.05.1989  JP  120250/89
16.05.1989  JP  120251/89
16.05.1989  JP  120252/89
16.05.1989  JP  120253/89
17.05.1989  JP  121583/89
23.05.1989  JP  127953/89

(43) Date of publication of application:
**27.11.1991   Bulletin 1991/48**

(73) Proprietors:
• **YOZAN INC.**
**Tokyo 112 (JP)**
• **SHARP KABUSHIKI KAISHA**
**Osaka 545 (JP)**

(72) Inventors:
• **TAKATORI, Sunao**
**Tokyo 112 (JP)**
• **KUMAGAI, Ryohei**
**Tokyo 112 (JP)**
• **MATSUMOTO, Koji**
**Tokyo 112 (JP)**
• **YAMAMOTO, Makoto**
**Tokyo 112 (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**JP-A- 6 415 830**           **JP-A- 6 482 133**

• **PROCEEDINGS OF THE 1986 IEEE
INTERNATIONAL CONFERENCE ON SYSTEMS,
MAN, AND CYBERNETICS 14 October 1986,
ALTANTA, USA pages 1621 - 1625 BURR 'A
neural network digit recognizer'**
• **PROCEEDINGS OF THE INTERNATIONAL
CONFERENCE ON SYSTOLIC ARRAYS 25 May
1988, SAN DIEGO, US pages 163 - 174 KUNG
'Parallel architectures for artificial neural nets'**
• **IEEE ACOUSTICS, SPEECH, AND SIGNAL
PROCESSING MAGAZINE April 1987, NEW
YORK US pages 4 - 22 LIPPMANN 'An
introduction to computing with neural networks'**

**Description**

The present invention relates to a data processing system consisting of a neural network for configuration or voice recognition from a data of configuration or voice.

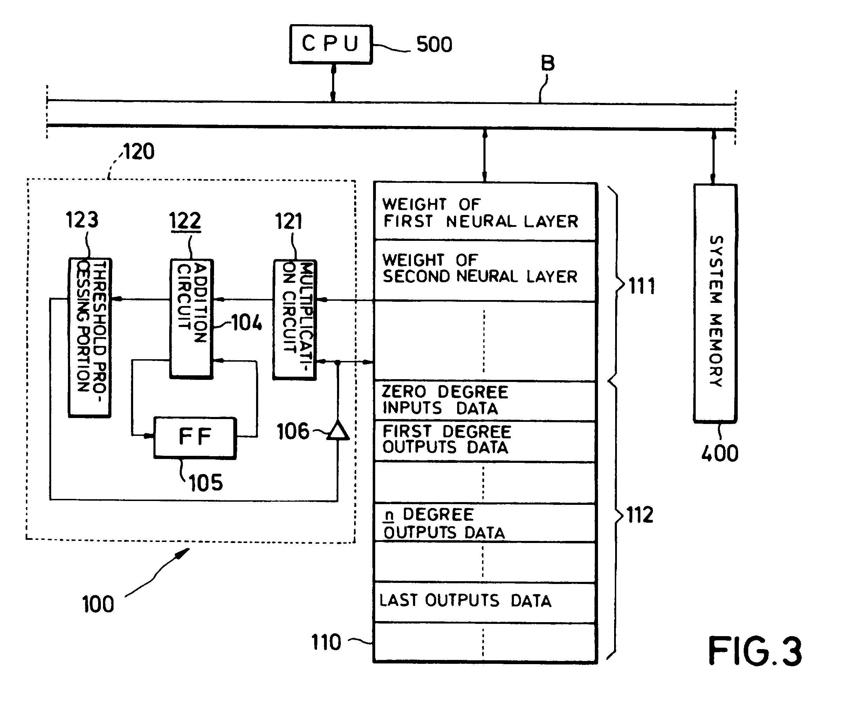

The neural network in this kind of data processing system consists of layers including neuron model (neuron, hereinafter) 1 parallelly settled, as shown in Fig. 3. In neuron 1, data DI1, DI2, DI3,... DIn to be input to neuron 1 from the outside are multiplied by weights W1, W2, W3,...Wn, respectively. Data D0 is output corresponding to the comparison result between the sum of them and threshold "θ". There are various manners to compare them. One of them, for example, is settled that the output data D0 becomes "1" when the sum is equal or more than the threshold "θ", and the output data D0 becomes "0" when it is less than the threshold "θ".

On the neural nethwork in Fig. 3, $2^n$ kinds of values are expressed by this bit pattern when input data is a bit pattern of n bits. Therefore $2^n$ number of neurons 1 are necessary for neural network to judge the input data. It means that 16 neurons 1 are necessary for a bit pattern of 4 bits: the number of neurons doubles for every additional one bit.

When a neural network is constructed by a lot of layers, the number of neurons increases in response to the increase of the layers ("neural layers" hereinafter), and the number of input lines to be connected to neurons---that is, the number of synapses--- also increases.

A neural layer is constructed by arranging such neurons parallelly, which is connected serially so that a neural network is constructed. There has been no established theory of the number of neurons or layers conventionally, if pressed to give an example, trials have been performed deciding the number of layers to be 3 or deciding the number of neurons to be equal to the input data, according to Perceptron which is suggested by Rosenblatt. Therefore, the relationship between the data processing to be performed in a neural network and the capacity or construction of neural network has never been clarified. Accordingly, it was unknown if the constructed neural network achieves the expected performance until an experiment result was obtained.

DP matching method the most practical method for acoustic recognition, a successful result is reported of recognition ratio of 85%.

In DP matching, characteristics of frequency and power are extracted, then a pattern matching is performed between reference phonetic pattern and input data, for recognition. The rule for the pattern matching must be determined according to a plurality of sampling data. It causes a limitation of recognition facility.

Document PROCEEDINGS OF THE INTERNATIONAL CONFERENCE ON SYSTOLIC ARRAYS 25 May 1988, SAN DIEGO, USA pages 163 - 174 KUNG 'Parallel architectures for artificial neural nets' discloses a programmable systolic array meant for a variety of connectivity patterns for ANNs (Artificial Neural Networks). Taking into consideration the relationship between the back-propagation learning rule and the kaczmarz iterative projection solver, it is observed that the number of hidden units per layer is set to be aproximately that of training patterns if they are randomly generated.

Document PROCEEDINGS OF THE 1986 IEEE INTERNATIONAL CONFERENCE ON SYSTEMS, MAN, AND CYBERNETICS 14 October 1986, ALTANTA, USA pages 1621 - 1625 BURR 'A neural network digit recognizer' refers to results applying neural networks to problems in Speech and handwriting recognition. A layered neural network is used to recognize both spoken and handwritten numerals and performance is compared to a conventional "nearest neighbor" classifier. Wherein an input neuron can sense low level signals directly (audio, video, etc) or it may measure a higher level feature such as the output of a visual bar mask. An output neuron is typically associated with a particular pattern class.

Finally, Document IEEE ACOUSTICS, SPEECH, AND SIGNAL PROCESSING MAGAZINE April 1987, NEW YORK US pages 4 - 22 LIPPMANN 'An introduction to computing with neural networks' describes a multilayer perceptron and demonstrates that no more than three layers are required in perceptron-like feed-forward nets because a three-layer net can generate arbitrarily complex decision regions. Concerning the problem of selecting the number of nodes in the second layer, said number must be greater than one when decision regions are disconnected or meshed and cannot be formed from one convex area. The number of nodes in the second layer required in the worst case is equal to the number of disconnected regions in input distributions.

The present invention has an object to provide a data processing system with a high recognition ratio from various characteristics data.

The data processing system according to the present invention comprises a characteristics output means and a plurality of neurons parallelly arranged as well as connected to the output means, each of the neurons multiplies the output from the output means by weights and compares a summation of the multiplication result with a threshold in order to output a data according to the comparison. The neurons are arranged as a plurality of neural layers in response to an abstraction ratio of the characteristics.

A recognition portion is provided with neurons that number as little as possible.

Fig. 1 is a block diagram of an image processing system in which an embodiment of the present invention is applied.

Fig. 2 is a block diagram of characteristics processing portion.

Fig. 3 is a block diagram of recognition portion.

Fig. 4 is a schematic diagram of a neuron of general type.

Fig. 5 is a schematic diagram of a neural layer.

Fig. 6(a) shows a comparative embodiment.

Fig. 6(b) shows another comparative embodiment.

Fig. 6(c) shows the 1st embodiment of a neural network according to the present invention.

Fig. 7(a) shows 3x3 convolution for an image processing.

Fig. 7(b) shows pixels' density.

Fig. 7(c) shows the 2nd embodiment of the neural network for recognising end points.

Fig. 8(a) shows the 3rd embodiment of a neural network.

Fig. 8(b) shows the 4th embodiment of the neural network.

Fig. 9(a) shows a comparative embodiment.

Fig. 9(b) shows the 5th embodiment of the neural network.

Fig. 10(a) shows a comparative embodiment.

Fig. 10(b) shows the 6th embodiment of the neural network.

Fig. 11 shows a data processing system for processing the learning of mode I.

Fig. 12 shows a data processing system for processing the learning of mode II.

Fig. 13 shows a weight change in response to time.

Fig. 14(a) shows the 7th embodiment of the neural network.

Fig. 14(b) shows the 8th embodiment of the neural network.

Fig. 14(c) shows the 9th embodiment of the neural network.

Fig. 15 shows the 10th embodiment of the neural network.

Fig. 16 shows the 11th embodiment of the neural network.

Fig. 17 shows the 12th embodiment of the neural network.

Figs. 18 and 19 show a thin tail generated through an image processing.

Fig. 20 shows a vertical line with a width of 2 pixels.

Fig. 21 shows the 1st judgment condition for an area of 3x3.

Figs. 22 to 25 show from the 2nd to the 5th judgment conditions.

Fig. 26(a) shows the process result of the vertical line with the width of 2 pixels.

Fig. 26(b) shows the process result of the horizontal line with the width of 2 pixels.

Fig. 27(a) shows a configuration of a 2-pixels' vertical line added one pixel.

Fig. 27(b) shows a configuration of a 2-pixels' horizontal line added one pixel.

Fig. 28(a) shows a process result of the configuration of Fig. 27(a).

Fig. 28(b) shows a process result of the configuration of Fig. 27(b).

Fig. 29 shows Freemann's chain code.

Fig. 30 shows a configuration with chain codes of anti-clockwise direction.

Fig. 31 shows a process manners for liner portion.

Fig. 32 shows a line consisting of pixels shifted by one dot successively.

Figs. 33(a) and (b) show a process of concavity with an angle of 90 degrees.

Fig. 34 shows another process of concavity with an angle of 90 degrees.

Fig. 35 shows a process of a convexity with an angle of 90 degrees.

Fig. 36 shows a process of a convexity with a sharp angle.

Figs. 37(a) and (b) show a process of an inner peripheral.

Fig. 38 shows a process of giving chain codes to an outer peripheral.

Fig. 39 shows a process of giving chain codes to an inner peripheral.

Figs. 40(a) to (d) show configurations to be processed.

Fig. 41 shows an embodiment of a converting portion.

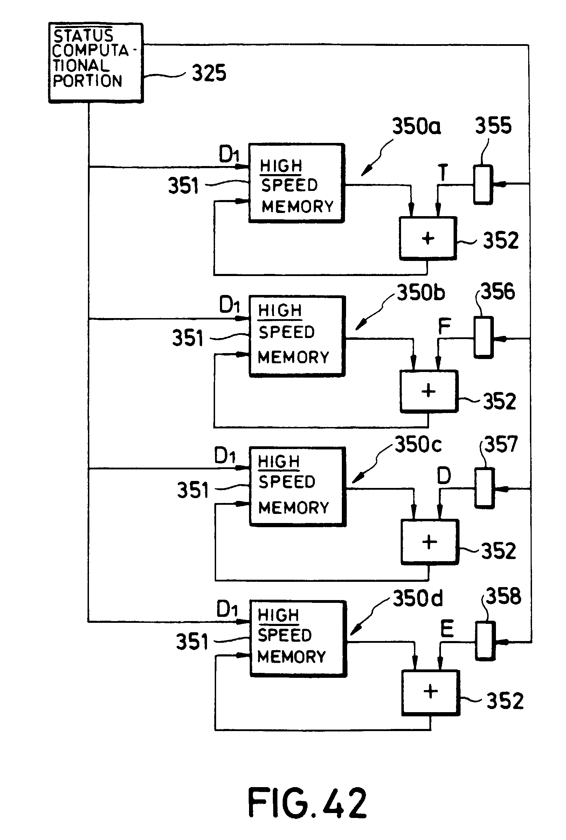

Fig. 42 shows another embodiment of the converting portion.

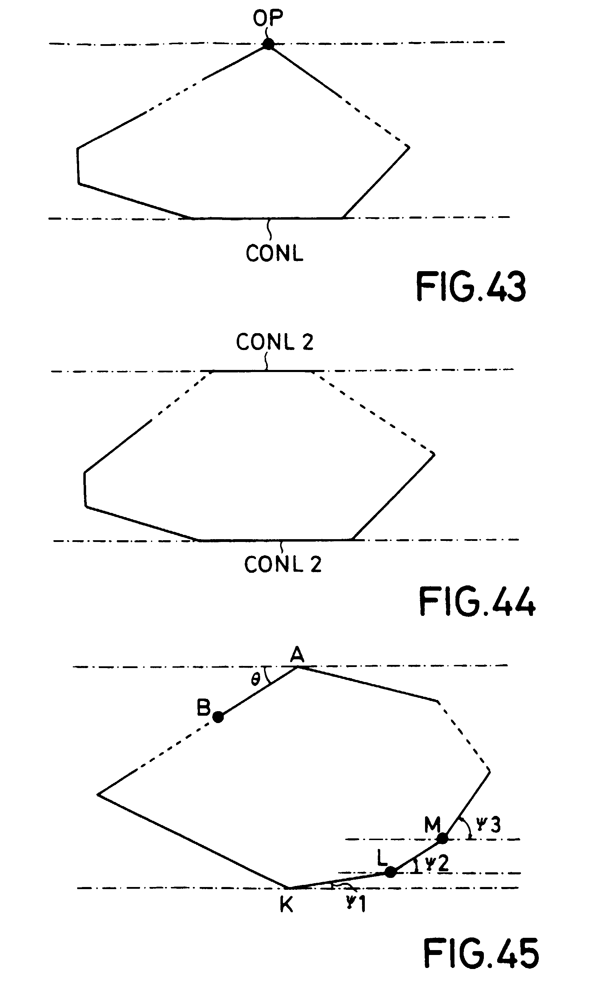

Figs. 43 and 44 show a diagram for expressing an algorithm for obtaining the minimum length.

Fig. 45 shows a method for calculating minimum length.

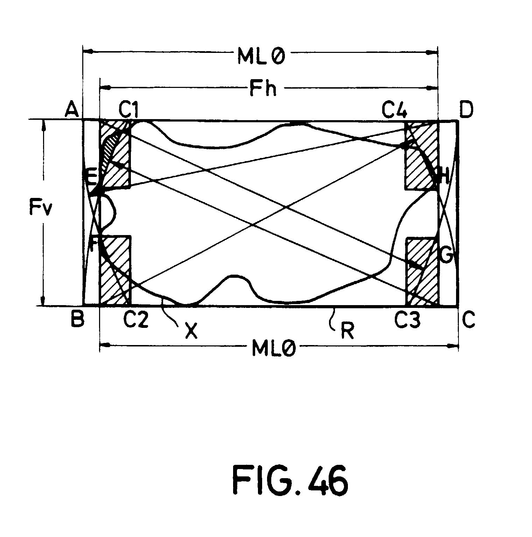

Fig. 46 shows an embodiment of a method for calculating maximum length.

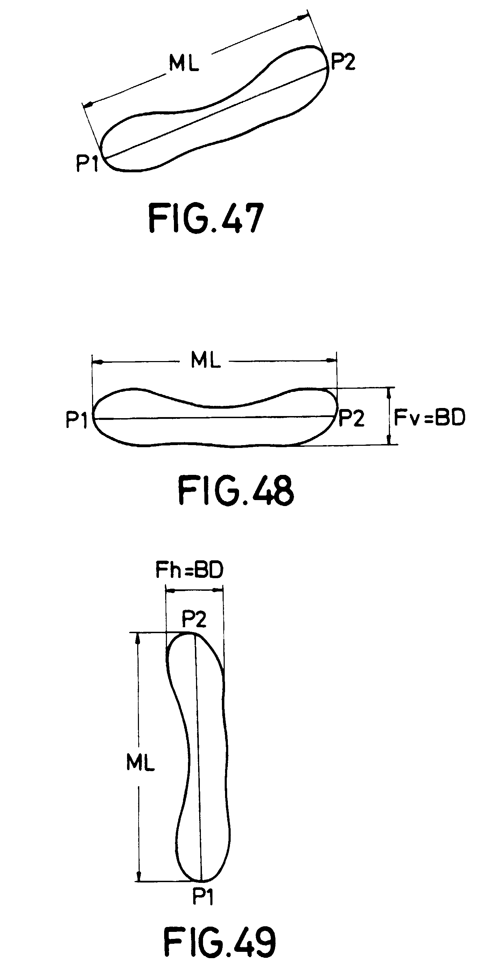

Fig. 47 shows an embodiment of a method for calculating a width perpendicular to the maximum length.

Fig. 48 shows a transformed configuration of Fig. 47 through Affine transformation in horizontal direction.

Fig. 49 shows a transformed configuration in vertical direction.

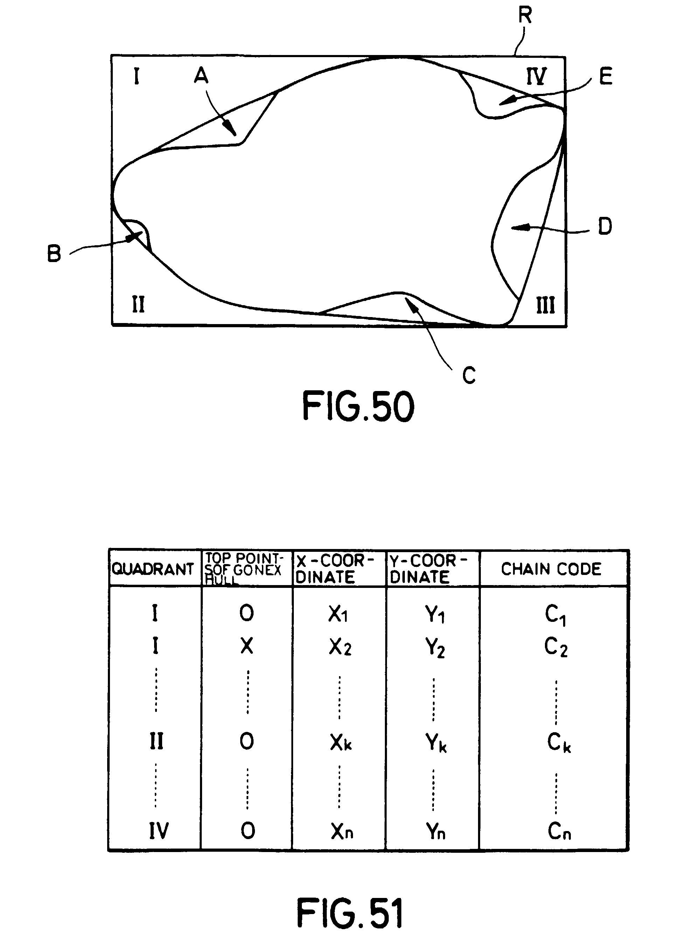

Fig. 50 shows a configuration with a concavity.

Fig. 51 shows a table of a data of boundary pixels.

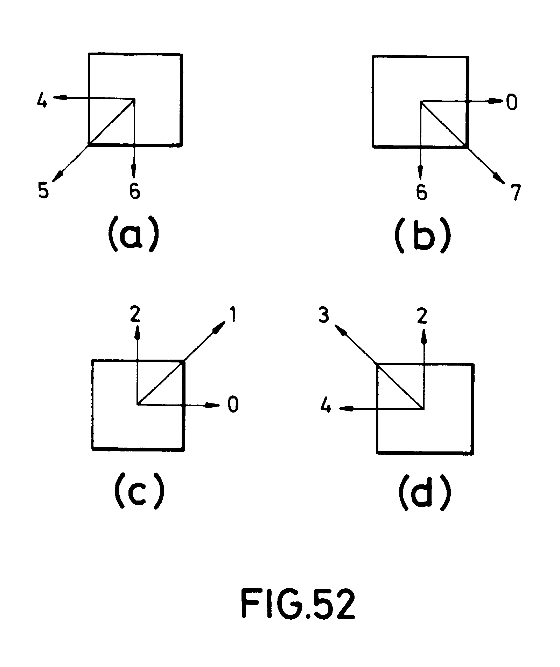

Fig. 52 shows chain codes for defining a concavity.

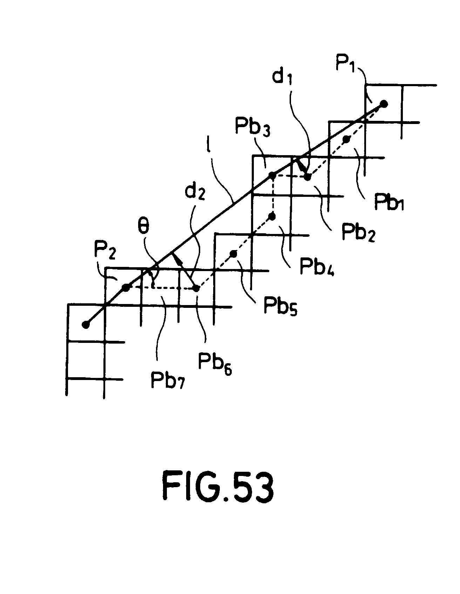

Fig. 53 shows a peripheral with a concavity.

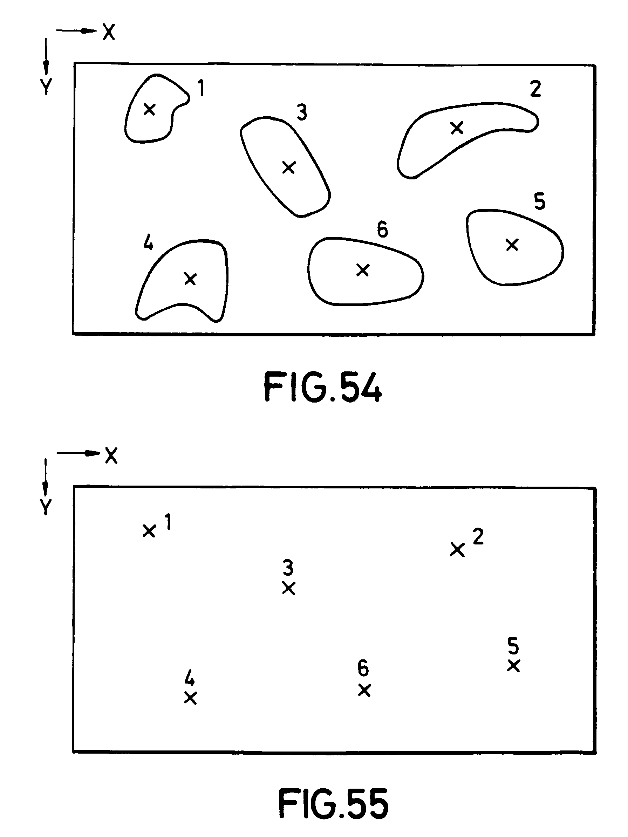

Fig. 54 shows an example of a configuration to be processed.

Fig. 55 shows centroids of a configuration in Fig. 54.

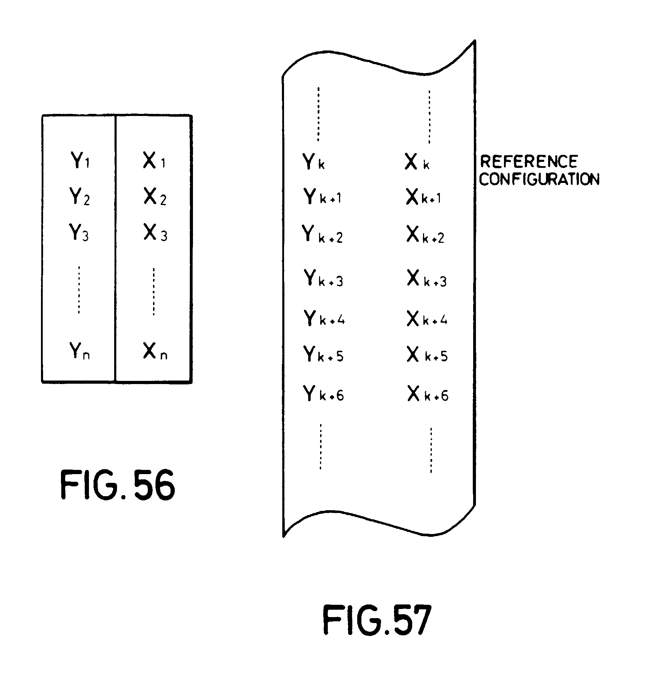

Fig. 56 shows a table of coordinates of centroids.

Fig. 57 partially shows the table in Fig. 56 in detail.

Hereinafter, embodiments of a data processing system according to the present invention are described by referring to the attached drawings.

Processing in a practical neural network is extremely complex, however some embodiments for quite simple processings are described first for easy understanding of the basic concept of the present invention.

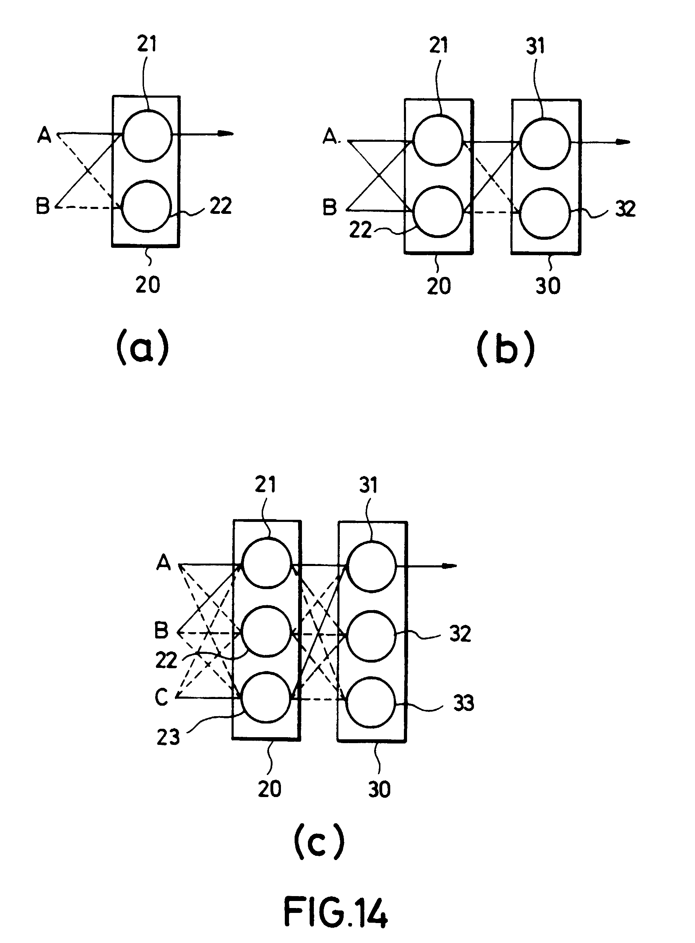

Fig. 14(a) shows the first embodiment of the present invention, which has obtained performance for processing of a logic computation of (A + B), from a proper learning.

The data processing system comprises one neural layer 20 in which neurons of the same number as the data, that is 2 neurons of 21 and 22, are settled. Data A and B are input to the neurons 21 and 22 respectively. Neurons 21 and 22 have connection portions for data input lines, for which weight of synapse W1s and threshold s are given. The weight W1 changes due to learning so that the neurons come to perform an expected processing. In this embodiment, only one neuron 21 performs the logic computation of (A+B) and the other neuron 22 does not work substantially. That is to say, the following computation is performed. It is settled that W1 = 1, W2 = 1, and = 1 in neuron 21, for instance. Neuron 21 outputs an output data "1" when

$$AW1 + BW2 >= 1 \tag{1}$$

On the other hand, it is settled that W3=0, W4=0 and $\theta$=1 in neuron 22, for instance. Therefore, the formula below is always true.

$$AW3 + BW4 < 1 \tag{2}$$

It means that the value of AW3 + BW4 does not exceed the threshold $\theta$ and output data "0" is output.

When at least one of data A and B is "1", neuron 21 ouputs an output data "1" and the data processing system of the present invention executes the logic computation (A + B).

Fig. 14(b) shows the second embodiment of the present invention. The data processing system executes a logic computation of (A $\oplus$ B). $\oplus$ shows the "exclusive logical addition". The data processing system comprises 2 neural layers 20 and 30. Neurons 21 and 22 are included in the first neural layer 20; neurons 31 and 32 are included in the second-final-layer 30. Data A and B are input to the neuron 21 and 22, respectively, in the first neural layer 20.

Logic computation of (A $\oplus$ B) is expanded as (AB + AB). Neuron 21 performs the processing of (AB) and neuron 22 performs the processing of (AB) in neural layer 20. Here, it is settled that W1 = 1, W2 = 1 and $\theta$=1 in neuron 21, for instance. Neuron 21 outputs an output data "1" when the following formula is satisfied.

$$AW1 + BW2 = 1 \tag{3}$$

On the other hand, it is settled that W3=1, W4=1 and $\theta$=1 in neuron 22, for instance. Neuron 22 outputs an output data "1" when the following formula is satisfied.

$$AW3 + BW4 > = 1 \tag{4}$$

Neuron 31 in neural layer 30 executes the processing of (AB + AB). It is settled that W5 = 1, W6 = 1, = 1, the output of neuron 21 is Y1 and that of neuron 22 is Y2, for instance. Neuron 31 outputs "1" when the following formula is satisfied.

$$Y1W5 + Y2W6 > = 1 \tag{5}$$

Neuron 32 does not work substantially. Neuron 31 outputs an output data "1" when data A and B are different from each other, and outputs "0" when both of them are "1" or "0". The data processing system of this embodiment executes the logic computation of (A $\oplus$ B).

Fig. 14(c) shows the third embodiment of the present invention. The data processing system comes to perform a logic computation of (A + B)C through learning. It comprises two neural layers 20 and 30. The first neural layer 20 includes neurons 21, 22 and 23 and the next neural layer 30 includes neurons 31, 32 and 33. Data A, B and C are input to the neurons 21, 22 and 23, respectively, in the first neural layer 20.

Neuron 21 processes (A + B), neuron 22 does not work substantially and neuron 23 ouputs an input data C as it is. That is, it is settled that W1=1, W2=1, W3=0 and =1 in neuron 21, for instance. Neuron 21 outputs the output data "1" when the following formula is satisfied.

$$AW1 + BW2 + CW3 > = 1 \qquad (6)$$

Neuron 22 does not work substantially, whose weights W4, W5 and W6 are settled 0 and threshold is settled 1. Neuron 23 outputs an output data "1" when the following formula is satisfied.

$$AW7 + BW8 + CW9 > = 1 \qquad (7)$$

Otherwise. it outputs an output data "0".

Neuron 31 in neural layer 30 processes (A + B)C according to the output data of neurons 21 and 23 in neural layer 20. It is settled that W11 = 1, W12 = , W13 = 1, $\theta$ = 2, the output of neuron 21 is Y1, the output of neuron 22 is Y2 and the output of neuron 23 is Y3. Neuron 31 outputs an output data "1" when the following formula is satisfied.

$$Y1W11 + Y2W12 + Y3W13 > = 2 \qquad (8)$$

Neurons 32 and 33 do not work substantially.

Neuron 31 outputs an output data "1" when at least one of data A and B is "1" and data C is "1". The data processing system of this embodiment executes a logic computation (A + B)C.

Here the basic concept of the present invention is described.

Data A and B in the first embodiment are connected by a logic operator of "+ (OR)". The logic computation of (A + B) is executed in a neural layer 20.

Data A and B are connected by "$\oplus$(EX-OR)". The logic computation (A $\oplus$ B) is expanded as (AB + AB). AB and AB are executed in the first neural layer 20, that is, a logic computation of an operator "x(AND)". Next, (AB + AB)--- the logic computation of the action factor "x(AND)"---is executed in the second neural layer 30. The logic computation of the second embodiment is executed through 2 neural layers.

Data A and B are connected by an operator "+(OR)": this logic computation is executed in the first neural layer 20. The result of the logic computation is connected to data C by an operator "x(AND)". The logic computation is (A + B) C, which is executed in the second neural layer 30. The logic computation of the third embodiment is executed through 2 neural layers.

When the processing of the data processing system is expressed by the logic computation factors "AND" and "OR", the number of neural layers is increased according to the number of logic computation operators of the construction of logic computation.

It is assumed that how far a data is abstracted can be defined, and here, it is defined as "abstraction degree". It is also assumed that the processing of neuron is expressed only by the following formula.

$$\Sigma WiAi - \theta \qquad (9)$$

where, Wi is a weight, Ai is an input data and $\theta$ is threshold.

It can be defined that an output data of a neuron is higher in abstraction degree than input data. It is also defined that data connected by an operator with each other are the same in abstraction degree to each other.

From these definitions, assuming data A and B of the processings of AB and AB in neuron 21 and 22 are of abstraction degree of "0", in the first neural layer 20 of the second embodiment for performing the logic computation (A $\oplus$ B), the output data to the neurons in the second neural layer 30 can be defined as abstraction degree of "1". And the calculation result of (AB + AB) in the second neural layer 30 can be defined as abstraction degree of "2". Namely, since the last output data is the second degree, the logic computation (A $\oplus$ B) needs 2 neural layers. The total layers of a neural network can be determined by subtracting the degree of input data from the degree of the final output data. That is to say, the number of neural layers is the difference between the degree of input data and the degree of the final output data.

This is the basic concept of the present invention. The degree indicates how data is abstracted. The abstraction can be evaluated from characteristics of the data. For example, pixel data is zero degrees; end point data, data of number of holes and Euler number are higher in degrees than pixel data. For obtaining an end point data from pixel data, neural layers are necessary, as many as the subtraction result of the degree of a pixel data from the degrees of an end point data.

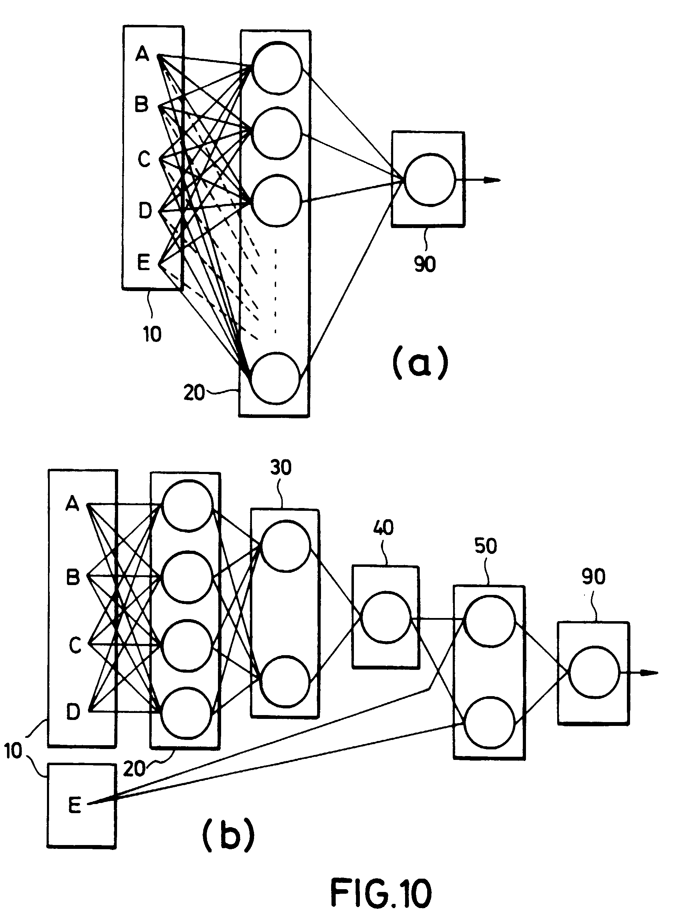

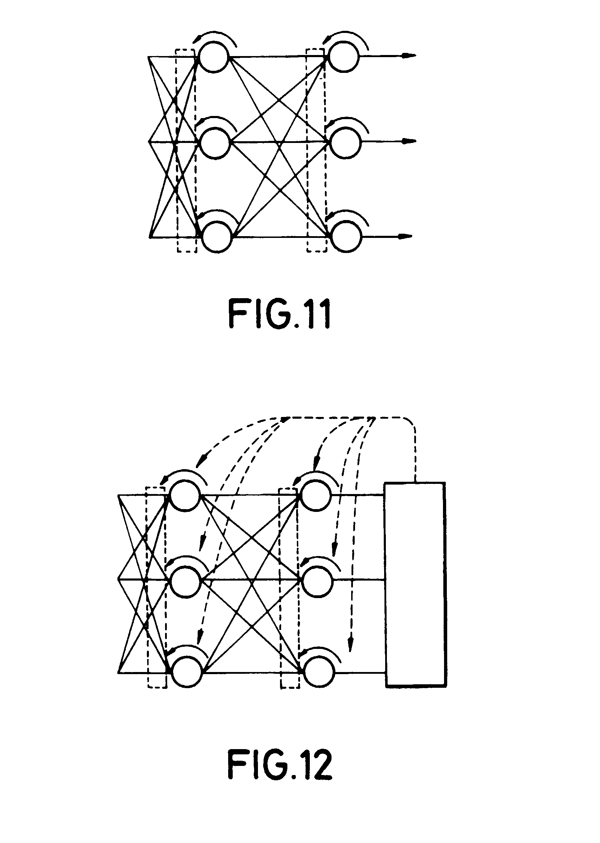

The embodiments for processing end points will be described later when referring to Fig. 10 and Fig. 11.

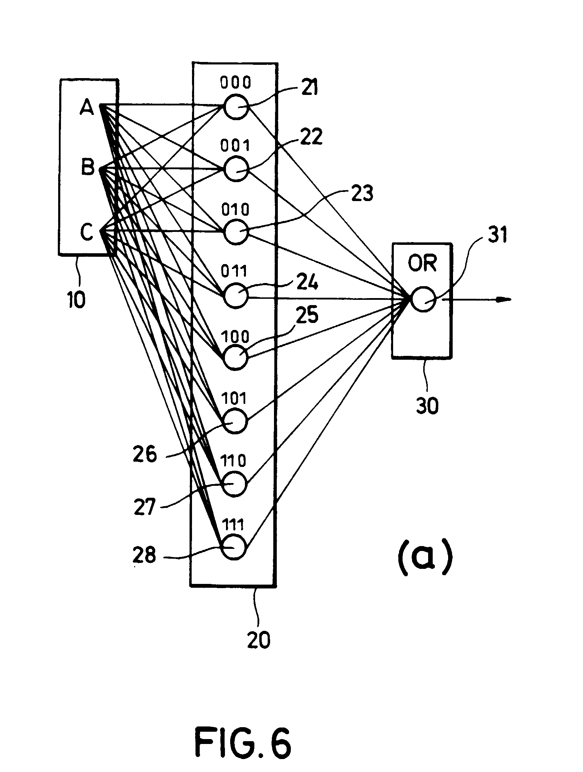

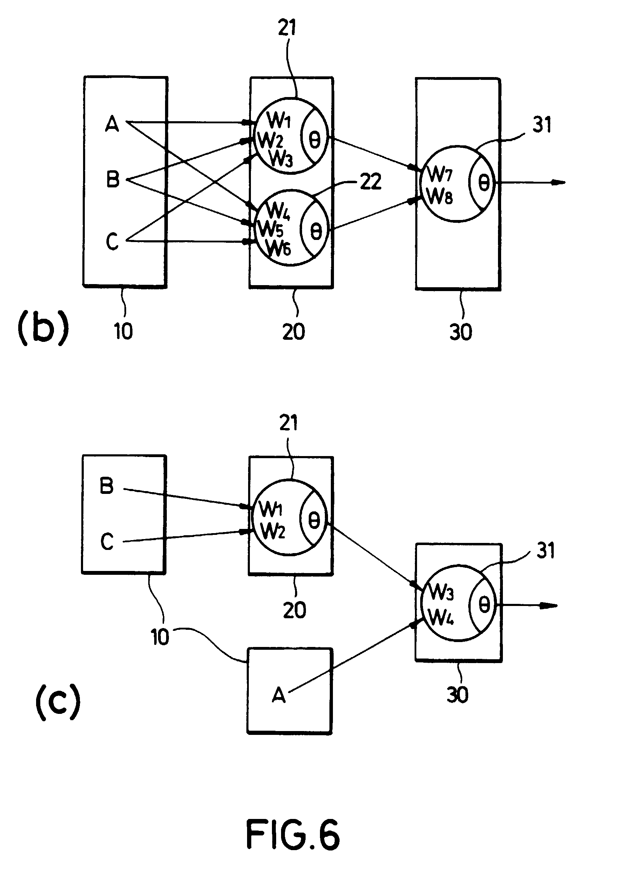

Figs. 6(a), (b) and (c) show a data processing system which performs the logic computation of (10).

$$Ax(B + C) \tag{10}$$

Fig. 6(a) shows similar construction as described in PRIOR ART. The eight neurons from 21 to 28 are settled in the first neural layer 20. The number is the same as the number of combinations of A, B and C in the data group 10, that is $2^3$.

A neuron 31 computes OR (logic sum) of the outputs from 21 to 28 of the first neural layer 20. The neuron 30 is settled in the second neural layer 30. A data "000" and so forth are generated as bit patterns by neurons A, B and C. These neurons output "1" when bit patterns shown for each neuron are input.

In the present data processing system, the number of neurons is 9 and the number of synapses is 32: the neurons and the synapses work inefficiently and the necessary capacity of memory is big. Lots of processing time is necessary, as well.

Fig. 6(b) corresponds to an expanded formula (11) of formula (10) for simplifying the computation.

$$AxB + AxC \tag{11}$$

The first neural layer 20 comprises neuron 21 for processing the computation of AxB and neuron 22 for processing the computation of AxC. The second neural layer 30 comprises neuron 31 for calculating OR of outputs of neurons 21 and 22.

In neuron 21, weights from W1 to W3 corresponding to data A, B and C, respectively, are settled W1 = 1, W2 = 1 and W3 = 0 so that output is "1" when formula (12) is satisfied.

$$AW1 + BW2 + CW3> = 2 \tag{12}$$

Threshold $\theta = 2$ in this case. Here, W4 = 1, W5 = 0, W6 = 1 and $\theta = 2$ in neuron 22, and W7 = 1, W8 = 1 and =1 in neuron 31.

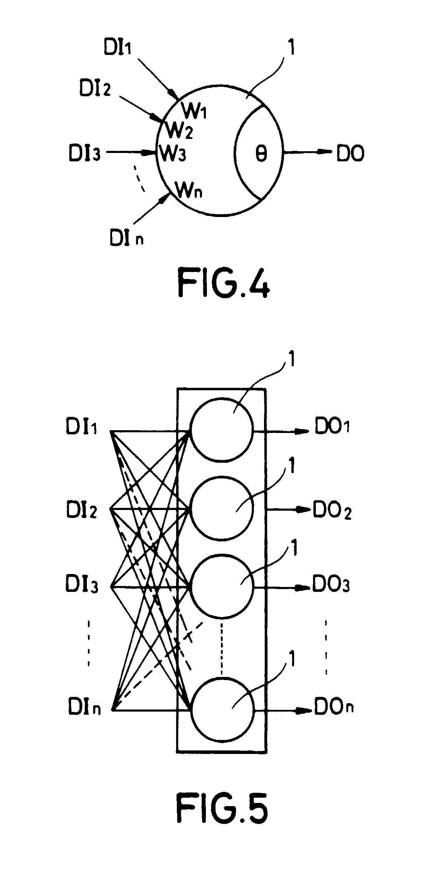

In the data processing system in Fig. 4(b), the number of neurons is 3 and that of synapses is 8. The neurons and synapses work more efficiently than the data processing system in Fig. 4(a). They work efficiently furthermore by using the system of the present invention, shown in Fig. 6(c).

Fig. 6(c) shows the fourth embodiment comprising the first neural layer 20 and the second neural layer 30. Data B and C are input to the first neural layer 20. Data A is directly input to the second neural layer 30. A neuron 21 for computing (b + C) is settled in the first neural layer 20. A neuron 31 for computing Ax(B + C) is settled in the second neural layer 30. Neuron 21 outputs "1" for example when W1 = 1, W2 = 1, $\theta = 1$ and formula (13) is satisfied.

$$BW1 + CW2> = 1 \tag{13}$$

Neuron 31 outputs "1" for example when W3 = 1, W4 = 1, $\theta = 2$ and formula (14) is satisfied, where Y1 is the output of neuron 21.

$$Y1W3 + AW4> = 2 \tag{14}$$

The number of neurons is 2 and that of synapse is 4. It means that the neurons and synapses work more efficiently than those in Fig. 6(b).

The basis idea of the present invention is described below.

As for formula (10), data B and C are combined together by an operator "+ (OR)". The computation result and data A are combined together by an operator "x (AND)". Essentially (data B and C) and (data A) should not be evaluated on the same level. If it is carried out, the performance becomes inefficient as in Figs. 6(a) and (b).

The degree of data B and C are the same and that of data A is higher by one degree than that in formula (10).

Here, the degree of data A is "1" when those of data B and C are "0".

Considering the relationship between the degrees of the data and the neural layer, only 0-degrees data is input in neural layer 20 and only 1-degree data is input in neural layer 30 in Fig. 6(c). Therefore, it is clear that neural layer 20 and 30 may be related as being degrees of input data. Hereinafter, a layer has a degree the same as that of the input data thereof.

Neurons and synapse work most profitably as well as efficiently by classifying data to be input to each layer into groups according to the degree of data and by inputting the data of each degree to the corresponding neural layer.

It is also possible to process data by a layer with a lower degree than the degree of the data. However, neurons and synapses work inefficiently in this case. Accordingly, the degree of each data should be defined as high as the data can take.

One data might be used in plural degrees, in a formula (a + B)xB etc. One data may be input to one or more neural layers.

An embodiment of a computer portion for the data processing system according to the present invention is described, hereinafter. Fig. 3 shows computer portion 100 connected to an image processing system described in the United States Patent Application No. 07/141,534, for example. Computer portion 100 processes data transmitted directly or through system bus 107 from the image processing system above. The process result is output to data memory 110 as the final output data.

Computer portion 100 comprises an output data generating portion 120 which performs association of neural network. The computation of linear-threshold-function of each neuron is performed in output data generating portion 120. Each portion in output data generating portion 120 is controlled by CPU 120.

As mentioned above, linear-threshold-function is the type of the formula (9). The multiplication of WiAi is executed in multiplication circuit 121 in output data generating portion 120. Each computation result of WiAi is input to accumulation circuit 122, successively, and WiAi is performed.

Accumulation circuit 122 consists of an addition circuit 104 and flip-flop 105 which is connected to the circuit 104 for constructing a feed-back line of the circuit 104. Once an addition result is held in flip-flop 105, accumulation is performed by adding the next input of WiAi to the addition result held. The computation result of WiAi is input to threshold processing portion 123, which performs a computation $(\Sigma WiAi-\theta)$. Normailing of the computation result of $(\Sigma WiAi-\theta)$ and others are preformed in the portion 123. And the final data is output from the portion 123 through a buffer 106 to the memory 110. Multiplication circuit 121 has two input lines for parallelly inputting weight data, and input or output data. Buffer 106 is connected to one of the input lines, which is used as a bi-directional line for inputting as well as outputting. Buffer 106 has high impedance when data is transmitted from data memory 110 to multiplication circuit 121.

For the first neural layer, input data of an abstraction degree of "0" as well as weights therefor are given. For the second neural layer, input data of a degree of "1" and weights therefor are given. The output of the nth neural layer, that is the nth output data, becomes the input of the (n + 1)th neural layer. In data memory 110, weight data is stored in the synapse weight area 111 and input and output data is stored in input and output data area 112. The threshold of each neuron to be settled in the threshold processing portion 123 is stored in the data memory 110 or the system memory 101 and transmitted to the threshold processing portion 123 before beginning the computation of each neuron.

Fig. 6 shows another computer portion 100. The same references as given to portions of Fig. 5 are given to corresponding portions of Fig. 6. Computing portion 100 comprises central process unit (CPU) 102, control data memory 110, output data generating portion 120, register 103, shift register 104, shift register 105, multiplexer 106 and system memory 101. CPU 102, system memory 101, control data memory 101 and register 103 are connected to bus 107. Input system 99 is connected to control data memory 110 as well as to bus 107.

Control data memory 110 consists of synapses weight area 111 and input-and-output data area 112.

Fig. 3 shows an example with two neural layers exept for output layer [Fig. 4(b) is the same case].

Input-and-output data area 112 is the area to store:

zero-degree input data to be input in the first neural layer,
zero-degree ouput data to be output from the first neural layer,
the first input data to be input to the second neural layer,
the first output data to be output from the second neural layer, and
the last output data to be output from the output layer.

Output data generating portion 120 comprises multiplication circuit 121, addition circuit 122 and threshold processing circuit 123. This circuit is controlled by register 103.

The multiplication circuit 121, to which input data DIn and synapse weight data W are input, calculates the multiplication thereof. The input data DI is stored in shift register 105 through controlling data memory 110 and MUX 106. It is input to multiplicatin circuit 121 with a predetermined timing. Synapse weight data W is given from control data memory 110 through MUX 106 to shift register 104 to be stored therein. It is input to multiplication circuit 121 in a predetermined timing.

The multiplication result of Dln x W is input to accumulation circuit 122 from multiplication circuit 121 for each input data Dln. Accumulation circuit 122 accumulates the multiplication results. It means that the following computation result is stored on a synapse.

$$\Sigma \ (Dln \ x \ Wi) \tag{15}$$

When the sum of input data and multiplicatin result of weight is calculated for one synapse, the sum is input to the threshold processing circuit 123. The threshold processing circuit stores the data of threshold θ corrresponding to each neuron in a form of a table, for example. The threshold processing circuit 123 compares the sum of data and threshold θ according to formula (16), and outputs output data DO.

$$DO = f[\Sigma(Dln \ x \ Wi) - \theta] \tag{16}$$

In the formula (16), f is defined as binarising function, for instance. Output data Do becomes "1" when the value subtracted by threshold θ from the sum is equal to or more than 0, and it becomes "0" when the value is less than "0".

The output data DO is transmitted through MUX 106 to input-and-output layer area 112 in control data memory 110 to be stored therein.

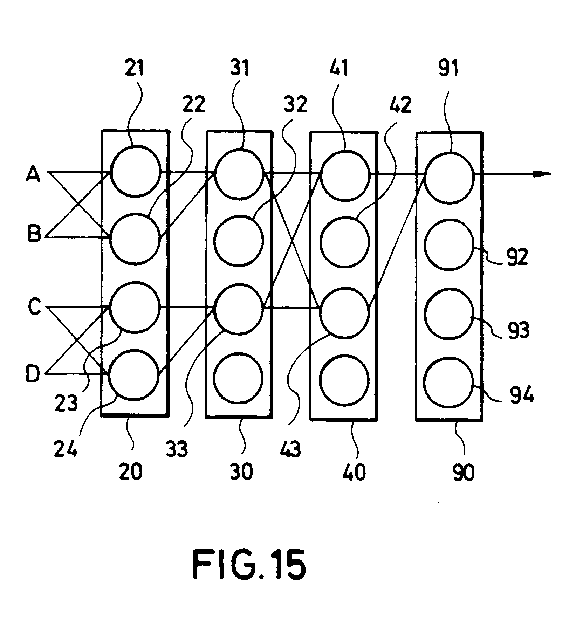

Fig. 15 shows the fifth embodiment of the present invention. It shows the case that input data A, B, C and D are processed according to the logic computation of

$$(A \oplus B) \oplus (C \oplus D) \tag{17}$$

through learning. Where, A, B, C and D are the digital values of "1" or "0", and the result of logic computation is output as the digital value of "1" or "0", also.

This embodiment comprises 4 neural layers of 20, 30, 40 and 90. The last neural layer 90 is the output layer to output the last output data. The first neural layer 20 comprises 4 neurons of 21, 22, 23 and 24: the second neural layer 30 comprises 4 neurons of 31, 32, 33 and 34; the third neural layer 40 comprises 4 neurons 41, 42, 43 and 44; the output layer 90 comprises 4 neurons of 91, 92, 93-and 94. Each data from A to D are input to each neuron in the first neural layer 20. Each neuron is connected to each neuron in the neighbouring neural layer. The lines which do not perform substantially are omitted in the figure.

Each neuron has weight Wi by which input data is multiplied, and threshold θ. Neuron outputs an output data "1" when the sum of multiplication is equal to or more than the threshold it outputs the output data "0" when the sum is less than the threshold θ, according to the formula (9) above.

For a logic computation (A ⊕ B), being expanded as (AB + AB), neuron 21 processed (AB) and neuron 22 processes (AB) in neural layer 20. For a logic computation (C ⊕ D), being expanded as (CD-CD), neuron 23 processes (CD and neuron 24 processes (CD).

Neuron 21 outputs an output data "1" when the formula below is satisfied.

$$AW21 + BW22 + CW23 - DW24 = 1 \tag{18}$$

where, W21 = -1 , W22 = 1, W23 = 0, W24 = 0 and θ = 1.

Neuron 22 outputs an output data "1" when the formula below is satisfied.

$$AW25 + BW26 + CW27 + DW28 = 1 \tag{19}$$

where, W25 = 1, W26 = -1, W27 = 0, W28 = 0 and = 1.

The weights Wis of neurons 23 and 24 and threshold s are settled, similarly to the above.

Neuron 31 in neural layer 30 processes (AB + ab), which outputs the output data "1" when the formula below is satisfied.

$$KW31 + LW32 + MW33 + NW34 = 1 \tag{20}$$

where, W31 = 1, W32 = 1, W33 =0, W34 = 0, θ = 1, the output of neuron 21, 22, 23 and 24 is K, L, M and N respectively.

Similar to the above, neuron 33 processes (CD + CD), which outputs "1" when at least one of outputs of neurons 23 and 24 is "1". The weight Wis of neurons 32 and 34 are settled 0 and do not work substantially.

Accordingly, neuron 31 outputs the result of (A ⊕ B) and neuron 33 outputs the result of (C ⊕ D).

Here, the outputs of neuron 31, 32, 33 and 34 are defined as E, F, G and H respectively. Neuron 41 in neural layer 40 processes (EG) and neuron 43 processed (EG). Neuron 41 outputs an output data "1" when the formula below is satisfied.

$$EW41 + FW42 + GW43 + HW44 = 1 \tag{21}$$

where, W41 = -1 , W42 = 0, W43 = 1, W44 = 0 and θ = 1.

Likewise, neuron 43 outputs an output data "1" when the formula below is satisfied.

$$EW45 + FW46 + GW47 + HW48 = 1 \tag{22}$$

where, W45 = 1, W46 = 0, W47 = -1, W48 = 0 and θ = 1.

Neuron 42 and 44, whose weights Wis and settled 0, do not work substantially.

Neuron 91 in the output layer 90 process (EG + EG) outputs an output data "1" when the formula below is satisfied.

$$PW91 + QW92 + RW93 + SW94 = 1 \tag{23}$$

where, W91 = 1, W92 = 0, W93 = 1, W94 = 0, θ =1, the outputs of neurons 41, 42, 43 and 44 are P, Q, R and S respectively.

Neurons 92, 93 and 94 do not work substantially. In this way, the neurons which do not work substantially can be omitted when an objective usage is limited and the number of output data is clarified.

From the above-mentioned, neuron 91 outputs the result of (E ⊕ G), that is the result of (A ⊕ B) + (C ⊕ D).

The degree of output data of the logic computations (A + B) and (C ⊕ D) are "2", because the operator " ⊕ (EX-OR)" is substituted by two operators of "AND" and "OR". Therefore, the degree of output data is 4 in the logic computation (A ⊕ B) ⊕ (C ⊕ D); this logic computation is processed through 4 neural layers which have neurons as many as the number of input data, that is 4.

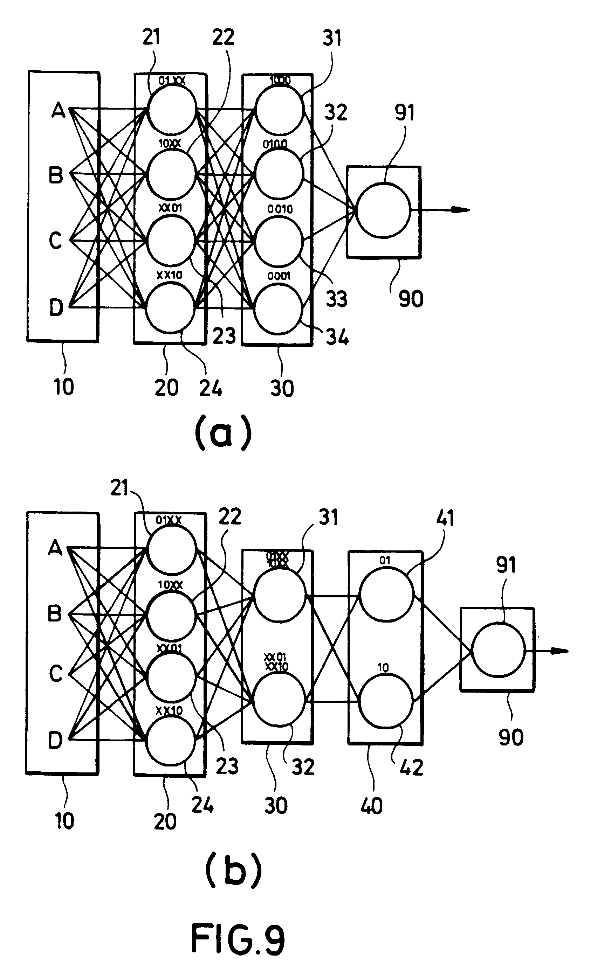

Figs. 9(a) and (b) show the sixth embodiment with a comparative example. These show a case to process input data according to the computation of

$$(A \oplus B) \oplus (C \oplus D) \tag{24}$$

where,

⊕ shows "exclusive or";
A, B, C and D are digital values of "1" or "0";
the results of this logical computation are output as digital values of "1" or "0".

Fig. 9(a) shows a comparative example, comprising a data group 10 from which input data is output, the first neural layer 20, the second neural layer 30 and output layer 90. Input data group 10 includes input data A, B, C and D. The first neural layer 20 comprises four neurons 21, 22, 23 and 24. the second neural layer 30 comprises four neurons 31, 32, 33 and 34. Data from A to D is input to each neuron in the first neural layer 20, which is connected to each neuron in neural layer 30. Output layer 90 comprises a neuron 91, to which each neuron in the second neural layer 20 is connected.

Neuron 21 in the first neural layer 20 has weights and threshold for the linear-threshold-function. It outputs an output data "1" when the sum of multiplication of each input data by the weight is equal to or exceeds threshold, and outputs "0" when the sum is smaller than the threshold. In the same way, neurons 22, 23 and 24 output "1" or "0" in response to the input data. Each neuron in the second neural layer 30 outputs "1" or "0" in the same way as the first neural layer 20.

Neuron 91 in output layer 90 outputs "1" or "0" according to the output data from the second neural layer 30 in the same way.

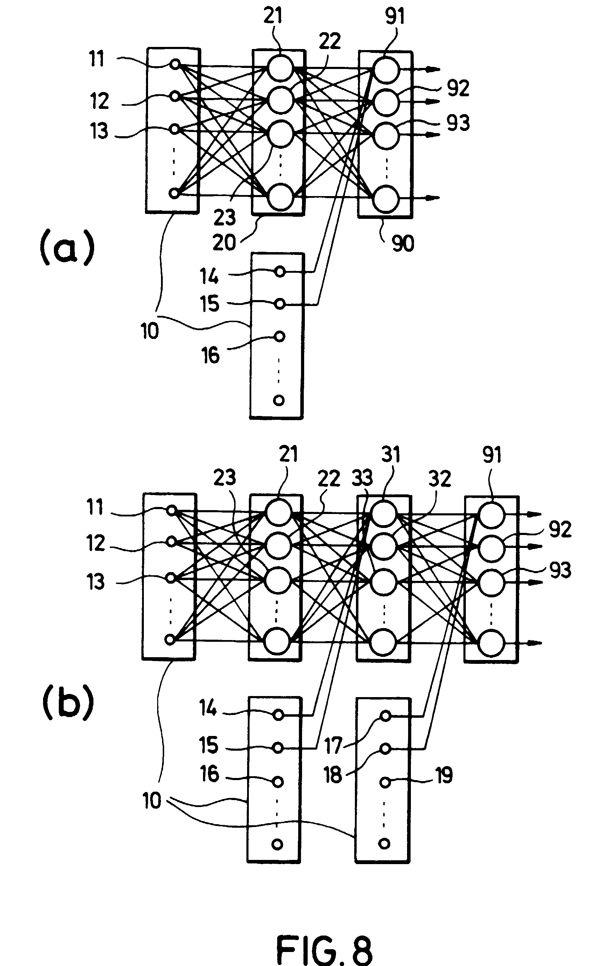

The result of logical computation (A ⊕ B) ⊕ (C ⊕ D) is "1" when data A does not coincide with B, and C coincides with D; or when A coincides with B and C does not coincide with D. Otherwise, it becomes "0". Each neuron in Fig. 8 (a) is constructed as follows.

Neuron 21, 22, 23 and 24 in the first neural layer 20 output "1" when A, B, C and D are 4 bit patterns of "01xx", "10xx", "xx01" and "xx10", respectively. They output "0" for other inputs.

Neuron 31 in the second neural layer 30 outputs "1" when only neuron 21 in the first neural layer 20 outputs "1". Otherwise, it outputs "0". Neuron 32 outputs "1" when only neuron 21 in the first neural layer 20 outputs "1". Otherwise, it outputs "0". Neuron 33 outputs "1" when only neuron 23 in the first neural layer 20 outputs "1". Neuron 34 outputs "1" when only neuron 24 in the first neural layer 20 outputs "1".

On the other hand, neuron 91 in output layer 90 outputs "1" when at least one neuron in the second neural layer 30 outputs "1".

When the input data of A, B, C and D is "0001" as bit pattern, only neuron 23 in the first neural layer 20 outputs "1" and other neurons of 21, 22 and 24 output "0". Consequently, neuron 33 in the second neural layer outputs "1" and neuron 91 in output layer 90 outputs "1". Similarly, when a bit pattern consisting of A, B, C and D are "0010", "0100", "1000", "1110", "1101", "1011" or "0111", one of neurons in the second neural layer outputs "1" and neuron 91 in output layer 90 outputs "1".

Fig. 9(b) shows the sixth embodiment of the present invention, comprising input data group 10, the first neural layer 20, the second neural layer 30, the third neural layer 40 and output layer 90. Input data group 10 consists of input data A, B, C and D. The first neural layer 20 comprises 4 neurons of 21, 22, 23 and 24. The second neural layer 30 comprises 2 neurons 31 and 32. The third neural layer 40 comprises 2 neurons 41 and 42. Output layer 90 comprises one neuron 91. Data from A to D in input data group are input to the neurons in the first neural layer 20, which are connected to the neurons in the second neural layer 30. Neurons in the second neural layer 30 are connected to the neurons in the third neural layer 40, which are connected to the neuron in output layer 90.

All neurons in neural layers 20, 30, 40 and in output layer 90 output "1" or "0" according to input data, similar to the case in Fig. 9(a).

Neurons 21, 22, 23 and 24 in the first neural layer 20 output "1", when 4 bit patterns of A, B, C and D are "01xx", "10xx", "xx01" or "xx10", are output respectively. Otherwise, they output "0". Neuron 31 in the second neural layer 320 outputs "1" when a neuron 21 or 22 in the first neural layer 20 outputs "1". Otherwise, it outputs "0". Neuron 32 outputs "1" when neuron 23 or 24 in the first neural layer 20 outputs "1". Otherwise, it outputs "0". Neuron 41 in the third neural layer 40 outputs "1" when only neuron 32 in the second neural layer 20 outputs "1". Otherwise, it outputs "0". Neuron 42 outputs "1" when only neuron 31 in the second neural layer 20 outputs "1". Otherwise, it outputs "0". Neuron 91 in output layer 90 outputs "1" when at least one neuron in the third layer 40 outputs "1".

When input data of A, B, C and D is a bit pattern of "0001", only neuron 23 in the first neural layer 20 outputs "1" and other neurons 21, 22 and 24 output "0". Consequently, only neuron 32 in the second neural layer 30 outputs "1" and neuron 42 in the third neural layer 40 outputs "1". Accordingly, neuron 91 in output layer 90 outputs "1". In the same way, when a bit pattern of A, B, C and D is "0010", "0100", "1000", "1110", "1101", "1011" or "0111", one of the neurons in the second neural layer 30 outputs "1". Consequently, one neuron in the third neural layer 40 outputs "1", thereby one neuron in the fourth neural layer 40 outputs "1". Therefore, neuron 91 in output layer 90 outputs "1".

As easily understood in Fig. 9(a) of comparative example, the number of synapses is 36 and the number of neurons is 10. In the embodiment in Fig. 9(b), the number of synapses is 30 and the number of neurons is 10. When input data is processed by logical computation of (A + B) + (C + D), 36 synapses are necessary in the comparative example; on the other hand, only 30 synapses are necessary in the present embodiment.

The number of synapses decreases about 20% by the present embodiment. Each embodiment above has similar advantages. That is, the number of synapses and the capacity of memory is decreased and the speed of computation becomes higher by an increasing number of neural layers and by settling number of neurons in a neural layer less than the number of neurons in the previous neural layer.

Figs. 10(a) and (b) show the seventh embodiment with comparative example. This example shows a case that input data is processed by the formula (25).

$$[(A \oplus B) \oplus (C \oplus D)] \oplus E \qquad\qquad (25)$$

Fig. 10(a) shows the comparative example. Input data group 10 comprises 5 data from A to E, the first layer 20 comprises 15 neurons and output layer 90 comprises one neuron. In the comparative example, each term of expanded formula of the formula (25) is input to each neuron in neural layer 20. All the data is processed as zero degree data.

Fig. 10(b) shows the seventh embodiment of the present invention, which comprises input data 10, the first neural layer 20, the second neural layer 30, the third neural layer 40, the fourth neural layer 50 and output layer 90. The first neural layer 30 and the second neural layer 30 perform the processings according to (A ⊕ B) and (C ⊕ D). The third neural layer 40 performs the processings according to [(A ⊕ B) ⊕ (C ⊕ D)]. The final result is computed with [(A ⊕ B) ⊕ (C ⊕ D)] ⊕ E in the fourth neural layer 50 and output layer 90.

As understood by the comparison between Figs. 9(a) and (b), the number of synapses and the number of neurons in the comparative example are 80 and 16, respectively: the number of synapses and the number of neurons in the present embodiment are 32 and 10 respectively. The number of synapses decreases to 40% and the number of neurons decreases to 60% approximately. Therefore, the same advantages in the above embodiment can be obtained in the present embodiment.

As grasped from the above explanation, the layer structure comprising input data groups, neural layers and output layer have to be constructed with the most appropriate way corresponding to the degree necessary for the data processing and the degree of input data. The input data in input to the appropriate layer corrresponding to the structure of the layer. "Degree"s here means the abstract degree of the data and the processings as stated above.

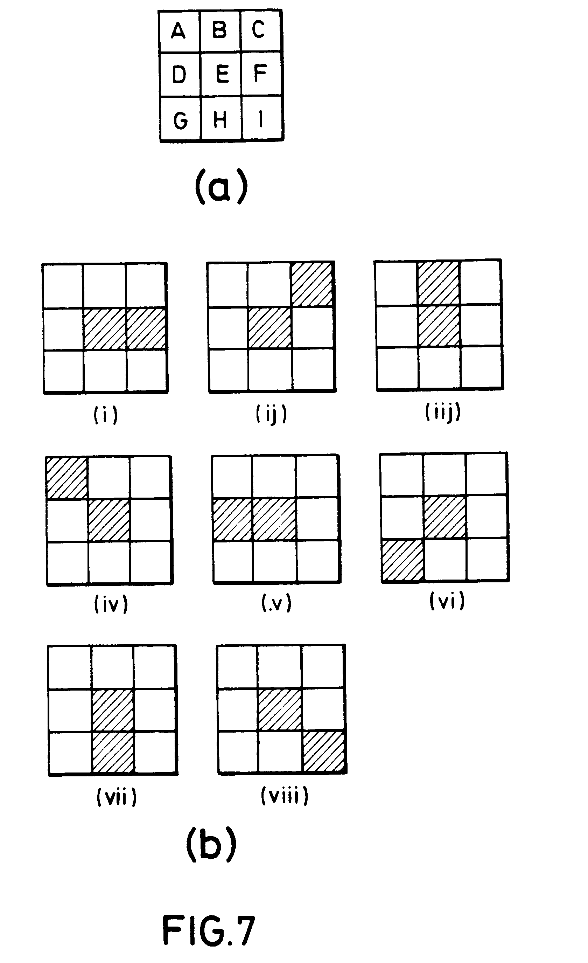

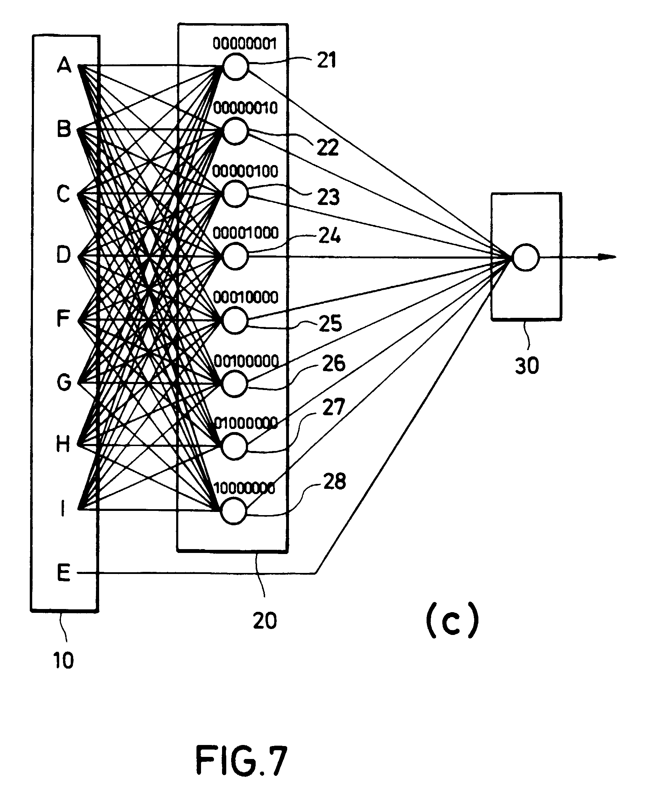

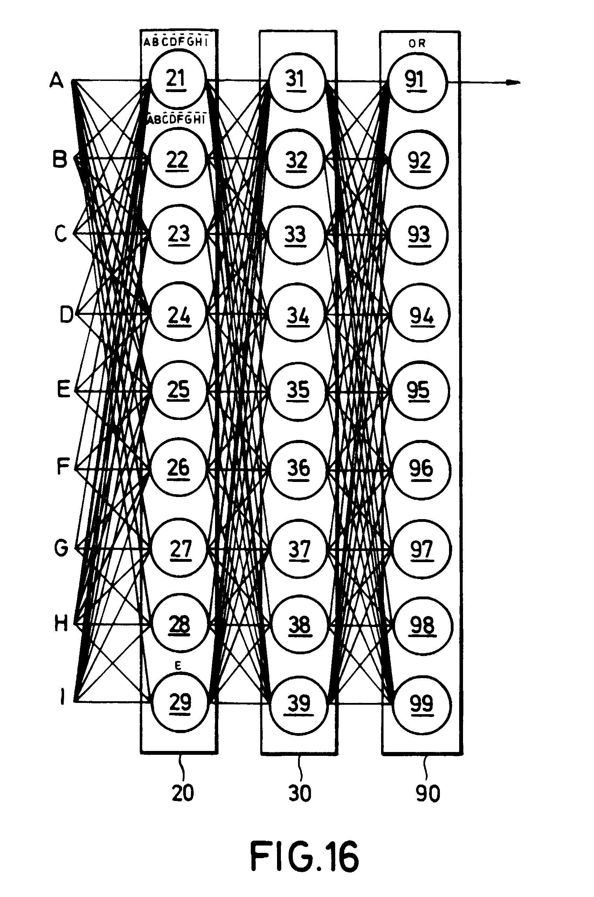

A data processing system for judging end point of a configuration is shown in Figs. 7 and 16.

Various manners will exist to judge end point of a configuration. In this case, in 3x3 convolution [ Fig. 7-(a)], the centre pixel [pixel E in Fig. 7(a)] is an end point when one of the patterns from (b)(i) to (viii) is generated. When one of pixels, except for the centre pixel, among A to D and F to I, is the density of a configuration (for example "1"), and the centre pixel E is the density of a configuration, the centre pixel is the "end point". Otherwise, it is not the "end point".

The data processing system for such judgement is constructed as shown in Fig. 16, for example, which shows the seventh embodiment of the present invention. This data processing system comprises the first neural layer 20 which has 9 neurons from 21 to 29, the second neural layer 30 which has 9 neurons from 31 to 39 and the output layer 90 which has 9 neurons from 91 to 99. The pixel data from A to I are input to the first neural layer 20.

Neuron 21 in the first neural layer 20 outputs an output data "1" when only pixel A is "1" in the pixels A to I except the pixel E. Similarly, neurons 22, 23, 24, 25, 26, 27 and 28 output an output data "1" when only pixels B, C, D, F, G, H and I are "1", respectively. Therefore, when one of pixels from A to D and F to I is "1", one of the neurons from 21 to 28 outputs an output data "1". On the other hand, neuron 29 outputs the data of pixel E.

Neuron 31 in the second neural layer 30 outputs an output data "1" when the outputs of neurons 21 and 29 are "1", that is, when pixels A and E are "1". Likewise, neurons from 32 to 38 output an output data "1" when pixels B and E are "1", when pixels C and E are "1", when pixels D and E are "1", when pixels F and E are "1", when pixels G and E are "1", when pixels H and E are "1" and when pixels I and E are "1", respectively. Neuron 39 does not concern the judgement of the end point, substantially.

Neuron 91 in output layer 90 outputs an output data "1" when at least one of the neurons from 31 and 38 in the second neural layer 30 outputs an output data "1", that is when at least one of the patterns is Fig. 7(b) from (i) to (viii) is generated. The centre pixel E is judged as an end point on this occasion. Neurons from 92 to 99 do not concern the judgement of the end points, substantially.

When the pixel data from A to I is defined as zero degree data, the output of neuron 91 is the third degree data and 3 steps of logic computations are constructed for judging end points. The computation is as follows. In neural layer 20, logical multiplication is performed for judging if only one of pixels in A to D and F to I is "1" or not, for example (ABCDFGHI) in neuron 21. In neural layer 30, performed logical multiplication is performed for judging if only one of the pixels in A to D and F to I is "1" and E is "1" or not, for example (ABCDFGHI . E) in neuron 31. In neural layer 90, the logical sum defined for judging is E is "1" and one of the pixels in A to D and F to I is "1".

The judgement of end points can be performed by a logical sum for judging if E is "1" and one of pixels in A to D and F to I is "1" in neural layer 30. Therefore, it is possible to judge end points through 2 neural layers. When the difference of degrees between output data and input data is 3, the judgement of end point is executed by settling at most 3 neural layers, without fail.

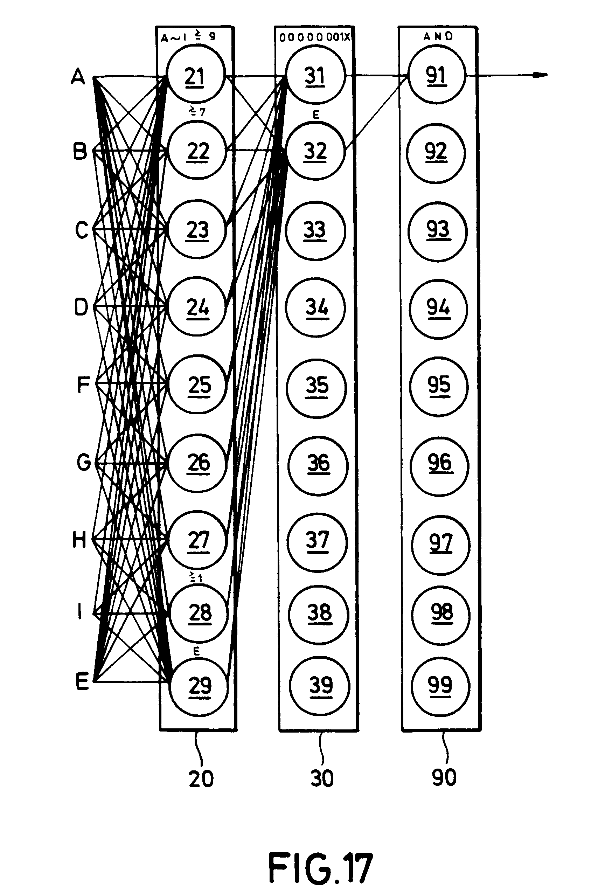

Fig. 17 shows the eighth embodiment of the present invention. The present data processing system comprises the first neural layer 20 which has 9 neurons from 21 to 29, the second neural layer 30 which has 9 neurons from 31 to 39 and the output layer 90 which has 9 neurons 91 to 99. The data of pixels from A to I are input to the first neural layer 20.

Neuron 21 in the first neural layer 20 outputs an output data "1" when 8 or more pixels from A to D and F to I are "1". Neuron 22 outputs an output data "1" when 7 or more pixels from A to D and F to I are "1". In the same way, neurons 23, 24, 25, 26, 27 and 28 output an output data "1" when 6 or more, 5 or more, 4 or more, 3 or more, 2 or more and 1 or more pixels from A to D and F to I are "1", respectively. Neuron 29 outputs the data of pixel E.

Neuron 31 in the second neural layer 30 outputs an output data "1" when only neuron 28 in neurons 21 to 28 in neural layer 20 outputs "1". That is, neuron 31 outputs the output data "1" when only one pixel in pixels from A to D and F to I is "1". Neuron 32 outputs the data of pixel E as it is. Neurons from 33 to 39 do not concern the judgement of the end points, substantially.

Neuron 91 in output layer 90 performs logical multiplication whether both neurons 31 and 32 output "1" or not. It outputs an output data "1" when only one pixel in A to D and F to I is "1" and E is "1". Neurons from 92 to 99 do not concern the judgement of the end points, substantially.

The end point data is judged through 3 neural layers in this embodiment.

The data processing system for this judgement is constructed as Fig. 7, which shows the ninth embodiment of the present invention. This data processing system comprises the first neural layer 20 consisting of 8 neurons 21 to 28, and the second neural layer 30 consisting of a neuron 31. The data of the pixels A to D and F to I are input to the first neural layer 20. The data of pixel E is input to neural layer 30.

Neurons 21 to 28 in the first neural layer judge if the pixel of a configuration is "1" in only A, only B or only C. Neuron 31 in the second neural layer 30 outputs "1" when one of the neurons from 21 to 28 outputs "1" and E is the pixel of a configuration "1".

The output data of neuron 31 becomes the second degree data when the data of each pixel, in the previous pixels of E and the following pixels E in the scan line order, are defined as the zero degree data. Therefore, when input system to data processing system becomes the image processing system, and each data and various characteristics values are the input data, end point data may be recognised as the second degree data in the case that each pixel data is defined as the zero degree data. Various data is output from an image processing system, such as the number of groups, the number of halls, Euler number, the characteristics value, and so on. Considering the degrees of these data, they are input directly to the most appropriate neural layer.

Fig. 8(a) shows the tenth embodiment of the present invention. The data processing system in this embodiment comprises data group 10, neural layer 20 and 90. Neural layer 90 is an output layer to output an output data outside of the data processing system.

Data group 10 comprises data 11, 12, 13 ... in the first group and data 14, 15 16 ... in the second group. The data in data group 10 is classified into 2 groups of the first and second, according to the degrees thereof.

Neural layer 20 comprises neurons 21, 22, 23 ... Output layer 90 comprises neurons 91, 92, 93 ... Each neuron in neural layer 20 is connected to each neuron of output layer 90. Data 11, 12, 13 ... in the first group are input to each neuron in neural layer 20. Data 14, 15, 16 ... in the second group are input to each neuron in output layer 90.

Each neuron in neural layer 20 compares the sum of each input data multiplied by weights with threshold so as to output an output data "1" or "0" according to the comparison result as shown in the formula (9), for example. Each neuron in output layer 90 calculates the sum of outputs from neurons in neural layer 20 and the data 14, 15, 16 ... in the second group, both of which are multiplied by weights. It outputs a data "1" or "0" according to the comparison result between the sum and threshold in the same way of the neurons in neural layer 20.

Data 11, 12, 13 ... in the first group is, zero degree data indicating if a pixel is "1" (black, for instance) or "0" (white, for instance) when the present system is applied to an image processing system. Data 14, 15, 16 ... in the second group is the data of higher degree indicating characteristics of an image.

In the tenth embodiment, the data of the first group---that is the data of lower degree---is input to the neurons in neural layer 20. The data in the second group---that is the data of higher degree---is input to the neurons in output layer 90. Accordingly, the neurons in neural layer 20 perform lower processing, that is the processing on the data of a pixel itself. The neurons in output layer 90 perform processing of a higher degree, that is the processing on various characteristics of a pixel.

In the tenth embodiment, the number of synapses, that is, the connection between input elements and neurons or between neurons decreased, and the number of neurons also decreases. That is why the data of higher degree is input directly to output layer 90, and is not input to neural layer 20. When the number of synapses decreases, the memory needs small capacity because the number of computations of neuron decreases, the computation speed becomes higher and the number of weight data decreases too. When the number of neuron decreases, the number of threshold decreases and the number of computation decreases as well as the memory capacity becomes small: consequently, the computation speed becomes higher. It is possible to process by a memory with small capacity at high speed in the present embodiment. An efficient data processing system with a simple circuit is derived from it.

Fig. 8(b) shows the eleventh embodiment of the present invention. The data processing system in the embodiment comprises 3 input data groups 10, neural layers 20 and 30 and output layer 90.

Input data group 10 comprises 11, 12, 13 ... in the first group, 14, 15, 16 ... in the second group and 17, 18 and 19 in the third group. Input data groups are classified into 3 kinds different from the third embodiment. The first neural layer 20 comprises neurons 21, 22, 23 ... and the second neural layer 30 comprises neurons 31, 32 33 ... Output layer 90 comprises neuron 91, 92, 93 ... Each neuron in the first neural layer 20 is respectively connected to each neuron in the second neural layer 30, which is respectively connected to each neuron in output layer 90.

The data 11, 12, 13 ... is respectively connected to each neuron in the first neural layer 20. The data 14, 15, 16 ... is respectively connected to each neuron in the second neural layer 30. The data 17, 18, 19 ... is respectively connected to each neuron in output layer 90.

Each neuron outputs an output data "1" or "0" in response to each input data according to the formula (9).

The data 11, 12, 13 ... in the first group is the zero degree data. The data 14, 15, 16 ... in the second group is the first degree data. The data 17, 18, 19 ... in the third group is the second degree data. The data of rather high degree is input to the second neural layer 30 and the data of further higher degree is input to the output layer 90.

The numbers of synapses and neurons decrease in the third embodiment in the same way of the third embodiment. Therefore, the same advantages in the second embodiment is obtained.

In the embodiment above, the degree of data is the number of processings executed to the data: each processing is executed in each neural layer. For instance, since pixel data is zero degrees, end points data is the third degree and the difference between these degrees is 3, at least the expected object is accomplished by settling 3 neural layers. The example of processings are "AND", "OR", "NAND" and "NOR" of computation element: "EX-OR", "EX-NOR" and so on have to be transformed to "AND" or "OR" because "EX-OR" and so on cannot be processed by one neural layer.

Weights have to be settled as a suitable value through learning of neurons for performing the above processes. Therefore, in the present embodiment, the weights are changed along time so as to follow exponential function, as described later. There are three methods classified roughly as described in the United States Patent Application No. 07/295,763. They are called here Mode I, Mode II and Mode III.

In Mode I, the weights of neurons are corrected according to the outputs of the neurons. This method for correction is effective when the objective value of the outputs of each layer is clear. When a neuron generates an output corresponding to an input and when the output is coincident with or near objective value, the relationship between the input and output is to be reinforced. This is equivalent to the weight enhancement of the synapse input significant inputs. In Mode I, since the objective value of the output of each neuron is clear, the output of each neuron and the objective value can be compared with each other. When both of them coincide each other or near enough---on the binary input, for example, the weight of the synapse input "1" is enhanced.

Mode II is shown in Fig. 11. The weight of neuron is corrected according to the last output evaluation. The method for correction is effective in the case for judging the processings of the data processing system with the wide view. Hamming distance between the last output of the output layer and the objective value, evalauation of Pythagorean distance and sensitised evaluation are effective for evaluation of the Mode II. When the output is coincident with or near enough to the objective value on the evaluation, the relationship between the input and output have to be reinforced. At that time, the weight of each synapse input "1", for example, is increased.

Mode III is the method to correct weight in the case of learning of memorising inputs as it is. The relationship between an input and the output generated first on the input is reinforced. That is, in the structure in Fig. 12, the weight of synapse input "1" of the neuron output "1" in response to the input is increased.

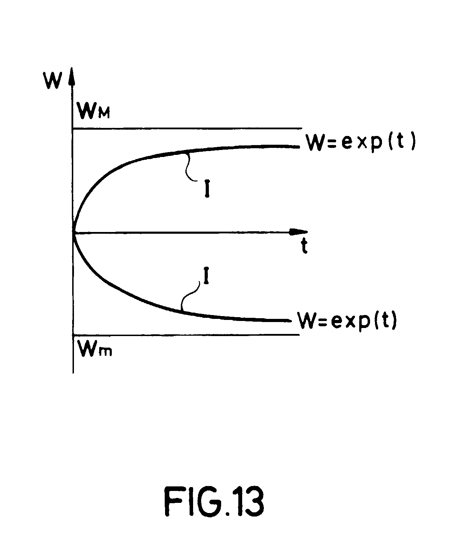

Inventors assume that the weight change of a neuron is the change of electrical potential of membrane of neural cell of an organism. It seems that the learning in data processing system becomes efficient when the weight is settled similarly to the electrical potential of membrane of neural cell of an organism. It also seems that the weight is expressed with exponential function, similarly to well-known RLC circuit, when the weight change in the same way of electrical potential of membrane. The weight W is expressed by the formula (9) as shown in Fig. 13.

$$W= +\text{-}\exp(t) \tag{9}$$

where, t is the learning time of each neuron, that is, the times of learning.

In the formula (9), when a synapse is stimulated, the mark is +. As shown with the solid line I, weight W starting from 0, becomes larger rapidly at first. Next, as time passes from the start of learning, the smaller the change of weight becomes and converges the maximum $W_M$. On the other hand, when a synapse is inhibited, the mark is -. As shown with the solid line 3, weight W starting from 0, becomes smaller rapidly at first. Next, as time passes from the start of learning, the smaller the change of weight becomes and converges the minimum Wm.

Since there is a little data correlation of the synapse just after starting learning, the weight W is settled small. Since the data correlation becomes closer after that, weight W becomes bigger promptly: consequently, the convergence by learning is expedited. When weight W is big already after learning, the synapse has strong data correlation sufficiently until the learning then. If the weight is changed frequently, the convergence by learning is blocked because of vibrations. Here, as weight W is settled to change little, enough convergence is performed.

Conventionally, there have been stimulated neuron and inhibited neuron for the characteristics of neuron's outputs. It has been necessary to investigate in detail considering the processings to settle them adequately in a data processing system. That is, it has been complicated to combine an inhibited neuron and a stimulated one in a data processing system. The present embodiment makes it possible to realise both inhibited or stimulated synapses only by selecting the sign of weight W of a synapse's characteristics. Accordingly, the circuit has more simple structure and higher flexibility. Data separation is improved by the existence of an inhibited neuron, as mentioned by Rosenblatt. ("The Perceptron: a probabilistic model for information storage and organisation in the brain", Psychological Review 65, pp386-408, Rosenblatt, 1958) The efficiency of learning in a data processing system improves by the present embodiment and, therefore, the last output data is converged and stabilised quickly. As mentioned above, the characteristics of neurons inhibited or stimulated is obtained only by changing the sign of plus or minus of a weight W. Accordingly, the data processing system obtains flexibility in circuit.

The change according to time passing of weight W is not necessary to be settled on explanatory function. It may be expressed by polygonal line approximately.

The processings are not only what are expressed by logical computation elements, but also what is settled according to the characteristics of output data.

As mentioned above, the data processing system for executing the expected processing can be constructed certainly.

As mentioned above, the number of synapses or neurons necessary to a certain processing can be decreased by the present invention. Accordingly, it is possible to decrease the memory capacity of a data processing system and to improve the processing speed. A similar learning of neurons as that of organsims can be realised and efficiency of learning can be progressed in a data processing system by changing the weight as time passes.

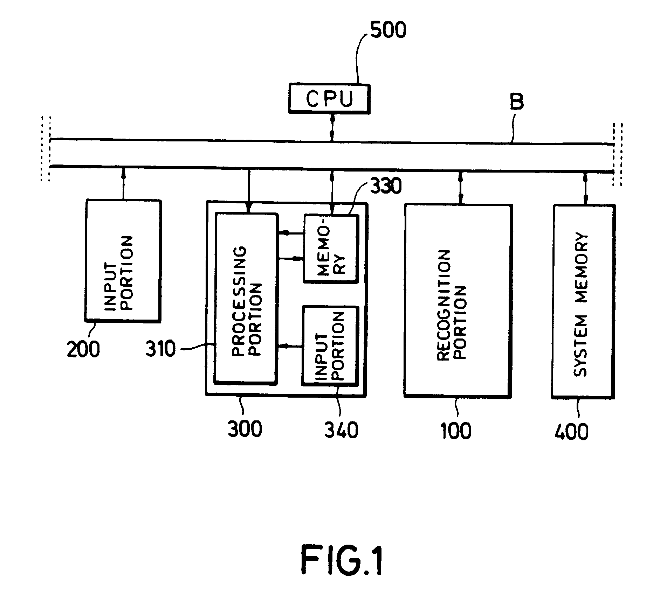

Fig. 1 shows an image processing system as a data processing system for an image data.

The image processing system consists of image input portion 200, an image processing portion 300 and a recognition portion 100, which are connected through system bus with one another as well as with a CPU 500. The image input portion includes input apparatus, such as an image scanner, and an I/0. The I/0 includes a data compression means and a data holding means, if desired. Image processing portion 300 consists of processing portion 310 for characteristics extraction portion and a frame memory 330 for holding an image. An image input portion 340 is provided therein, if desired.

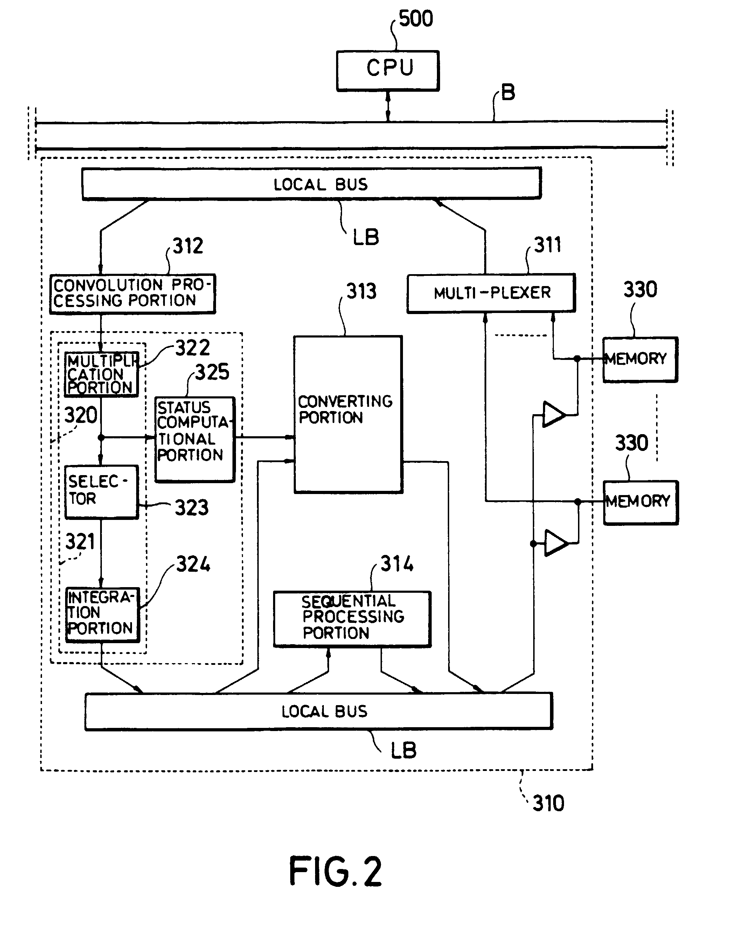

The recognition portion 100 performs image recognition to be extracted according to the image processing portion 300. A plurality of neural layers are constructed. The output of the neural layer is held in the memory. Fig. 2 shows the processing portion 310 which transmits data, selectively passed through a multiplexer 311 from the frame memory 330, through a local bus LB to a convolution processing portion 312. The convolution processing portion holds data in an area of a predetermined size, for example 3x3. The held data are output parallelly to the computational portion 320. The computational portion consists of a numerical computational portion 321 and status computational portion 325. The output of convolution processing portion is input to the numerical portion 321. The portion 321 has multiplication portion 322, selector 323 and integration portion 324, which are connected successively. Differential and other operator processing are performed in the numerical portion 321. The portion performs multiplication of densities of each pixel by weights and integration of the multiplication result. Weights with different absolute values are not multiplied to the same pixel data, according to experience of the inventor. Therefore, the number of kernels of multiplication is minimised. The number of selectors and gates following the kernels is also minimised. The numerical portion has the highest performance with the minimum size of circuit. Data in the numerical portion is transmitted to the status portion 325. The portion 325 performs the following processes or judgement.

I) Judgement whether the centre pixel is to be processed or not.
II) Judgement whether there is a pixel in 8-neighbourhood different in density from the centre pixel.
III) Judgement which of the pixels in 8-neighbourhood are equal to or different from the centre 5 pixel.
IV) Number of TFDE for calculating Euler number.
V) Identification ratio in comparison with a predetermined pattern.
VI) Others.

The status computation is performed simultaneously with and independently of the numerical computation. Both circuits are efficiently constructed and improved in process speed. The output of the status computational portion is itself an important characteristics data.

The converting portion 313 consists of a static RAM and a light computational portion such as full adder connected to a branch of an output of the RAM. The output of the light computational portion is fed back to a data input of the RAM. The converting portion performs repeatedly the same calculation for the same data, accumulation, successive comparison and other complex calculation by a small circuit.

The output of computational portion 320 and converting portion 313 are returned through a local bus for output to one of the frame memories.

A sequential processing portion 314 is connected to the local bus for labelling, thinning and other sequential processing. The sequential processing portion consists of a line memory, a ratch and a logical portion. Pixels on the previous scan line to the objective scan line can be reviewed.

The recognition portion 100 is connected through the system bus B with the image processing portion 300.

Hereafter, an embodiment in which a thinned image is output from the image processing portion 300.

When a pixel is only a juncture connecting a plurality of configurations with one another, the topology of the total configuration is changed if the pixel is deleted. It is possible to judge whether a pixel is such a juncture or not by evaluating the number of connectedness in 8 connectedness. When a pixel is such a juncture, the number of connectedness is not less than two. Therefore, a pixel with the number of connectedness not less than two should not be changed to background pixel in order to maintain the characteristics of a configuration.

The number of connectedness $N_8$ is calculated with respect to 8 connectedness as follows:

$$N_8 = \Sigma \ (\overline{P}_k \text{-} \overline{P}_k \ \overline{P_{k+1}} \ \overline{P_{k+2}})$$

$$k=0, 2, 4, 6$$

$$\overline{P}_k = 1\text{-}P_k$$

where, the center pixel of 3x3 convolution is processed, the right neighbor of the center pixel is $P_0$, and the suffix of the pixel around the center pixel increases anti-clockwise.

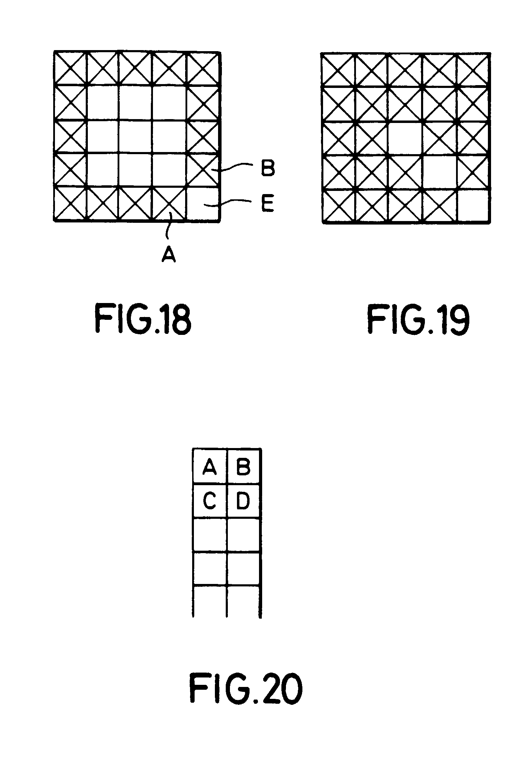

In Fig. 18, there is shown a square processed one time for thinning. By the process one time, boundary pixels of a configuration are changed to background pixel (shown by x) according to various rules. Boundary pixels have, for example, a density of "0"; the pixels of a configuration have, for example, a density of "1".

When a scan line advances rightwardly and is generated after upper scan lines, the lower right boundary pixel E of the square, that is, the pixel finally scanned of a configuration becomes end point after other boundary pixels have already processed. According to the rule with respect to the end point above, the end point cannot be deleted. Therefore, pixels upper left neighbor of the pixel E is also remained, then a spike extending down- and rightwardly is generated.

For preventing the above spike due to end point judgment, the present invention applies parallel processing for end point judgment. Parallel processing means that in each process cycle the neighbor pixels around the pixel to be processed are evaluated by the density before that process cycle. In Figure 18, the deleted pixels indicated by x are evaluated by the density before deletion. In this evaluation, the lower left pixel E has upper and left neighbors so as not to be deemed to be end point. Then the pixel E is changed to background pixel and the spike cannot be generated.

The opposition of the parallel processing is sequential processing, in which each pixel is evaluated by the density given in that process cycle.

The parallel processing for end point has a disadvantage. A line parallel or perpendicular to the scan line with a width of two pixels is deleted by parallel processing above.

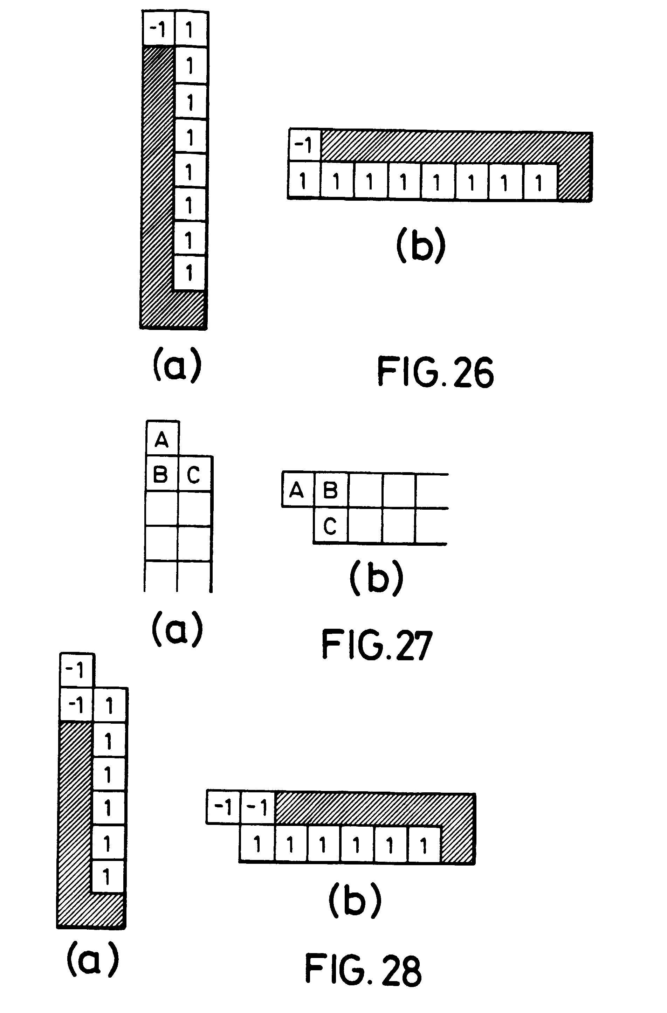

In Fig. 27 (a), the upper left point A of the line perpendicular to the scan line with a width of two pixels is not the isolate or end point and has a number of connectedness of "1", as well as being a boundary pixel. The pixel A is to be deleted according to the end point judgment above. The right neighbor B of the pixel A is also deleted because the pixel A is deemed to be remained in the parallel processing. Similarly, left point C and the right neighbor D thereof are deleted in the lower line by parallel processing. The line perpendicular to the scan line with the width of two pixels is at last deleted in parallel processing, as will be understood from the description above.

A line parallel to the scan line with a width of two pixels is shown in Fig. 27 (b). The pixels A, A',... in the upper line are deleted through parallel processing because they have lower neighbors. The pixels B, B',... in the lower line are deleted through parallel processing because the upper line is deemed to be remained. So the line in fig. 27 (b) is at last deleted through parallel processing.

Rules for processing a two pixel line parallel or perpendicular to the scan line are proposed by the present invention, as follows:

a-i) In a 3x3 convolution, when the upper and left neighbor of the center pixel A are background pixels, the center pixel A is given an index density. The index density is a density different from the density to be given to a pixel in a configuration or background. The index density may be "-1", for example, as shown in Fig. 5.

a-ii) When the center pixel A in a 3x3 convolution in Fig. 6 is not processed by the rule A-i, the center pixel is processed so that the center pixel is remained when the upper neighbor C is an indexed pixel and the lower neighbor A is a background pixel in the meaning of sequential processing.

a-iii) When the center pixel A in a 3x3 convolution in Fig. 7 is not processed by either the rules a-i or a-ii, the center pixel A is processed so as to remain when the left neighbor C is an indexed pixel and the right neighbor B is a background pixel in the meaning of sequential processing.

a-iv) When the center pixel A in a 3x3 convolution in Fig. 8 is not processed by either of the rules from a-i to a-iii, the center pixel A is processed so as to be given an index density when the upper neighbor B is an indexed pixel in the meaning of sequential processing and both of the right and left neighbors C1 and C2 are background pixels in the meaning of parallel processing.

a-v) When the center pixel A in a 3x3 convolution in Fig. 9 is not processed by either of the rules from a-i to a-iv, the center pixel A is processed so as to be given an index density when the left neighbor B is indexed pixel in the meaning of sequential processing and both of the upper and lower neighbors C1 and C2 are background pixels in the meaning of parallel processing.

The pixel given the indexed density in one process cycle is changed to background pixel in the next process cycle. The above rules from a-i to a-v are applicable for the case that a scan line advances rightwardly and is generated after upper scan lines.

The rules are generalized for any manner of scan lines, as described in b-i to b-v.

b-i) When a pixel which the current pixel follows along the scan line is a background pixel or an indexed pixel, in the meaning of a parallel processing, and when a pixel on the previous scan line and positioned corresponding to the current pixel is a background pixel or an indexed pixel in the meaning of parallel processing, the current pixel is given an index density.

b-ii) When the current pixel is not processed according to the rule b-i, when the pixel on the previous scan line and positioned corresponding to the current pixel is an indexed pixel in the meaning of the sequential processing, as well as when the pixel on the following scan line and positioned corresponding to the current pixel is a background pixel in the meaning of sequential processing, the current pixel remains as is.

b-iii) When the current pixel is not processed according to the rules b-i or b-ii, when the pixel on the previous scan line and positioned corresponding to the current pixel is an indexed pixed in the meaning of sequential processing, and when the pixel on the following scan line and positioned corresponding to the current pixel is a background pixel, the current pixel remains as is.

b-iv) When the current pixel is not processed according to the rules b-i, b-ii or b-iii, when the pixel on the previous scan line and positioned corresponding to the current pixel is an indexed pixel in the meaning of sequential processing, and when the pixel to which the current pixel follows and the pixel following to the current pixel along the scan line are background pixels, the current pixel is given an index density.

b-v) When the current pixel is not processed according to the rules b-i, b-ii, b-iii or b-iv, when the pixel to which the current pixel follows is an indexed pixel along the scan line in the meaning of sequential processing, and when the pixel on the previous and the following scan lines and positioned corresponding to the current pixel are background pixels, the current pixel is given an index density.

The processing according to the rules a-i to a-v are described, hereinafter, referring to Figs. 26 to 28.

The configuration in Fig. 26 (a) is a two pixel vertical line and is to be processed by the rules a-i and a-iii. First, the upper left end pixel is processed to be given an index density, such as "-1", according to the rule a-i. The right neighbor of the first pixel is processed to be maintained as is, according to the rule a-iii. Therefore, the vertical two pixel line is processed in thinning to be a one pixel line consisting of the right side pixels except for the bottom pixel.

The configuration in Fig. 26 (b) is a two pixel horizontal line and is to be processed by the rules a-i and a-ii. First, the upper left end pixel is processed to be given an index density, such as "-1", according to the rule a-i. The pixels on the upper line are deleted except for the left end pixel above. On the lower line, the left end pixel remains as is according to the rule a-ii. The pixels other than the left end pixel remain as they are. Therefore, the pixels on the lower line remain except for the right end pixel.

The configuration in Fig. 27 (a) consists of a two pixel vertical line and a pixel A attached from upward to the upper left end pixel of the two pixel line. If the rules above are not applied to this configuration, the pixel A is deleted because the pixel is not an end point, having lower neighbors B and C. On processing the two pixel line, the left end pixel B is deleted because the upper neighbor A is deemed to exist. The pixel C and other pixels are deleted due to parallel processing. Finally, the total configuration is deleted.

To prevent this deletion, the pixel A is given an index density according to the rule a-i. the pixel B is also given the index density according to the rule a-iv. By this processing, the configuration is processed to be a one pixel line consisting of right side pixels except for the right bottom pixel.

A configuration consisting of a two pixel vertical line and a pixel attached from upward to the upper right end pixel of the line can be processed similarly to the above.

The configuration of Fig. 27 (b) consists of a horizontal two pixel line and one pixel A attached from leftward to the upper left end pixel of the line. If the rules above are not applied to this configuration, the pixel A is deleted because the pixel is not an end pixel, having right neighbors B and C. On processing the two pixel line, the pixel B is deleted because the left neighbor is deemed to exist. Then the total pixels on the upper line are deleted. As for the lower line, the left end pixel C is deleted because the upper left neighbor A is deemed to exist. Then the total pixels on the lower line are deleted. So the two pixel line is at last completely deleted.

To prevent this deletion, the pixel A is given an index density according to the rule a.i, as shown in Fig. 28 (b). The pixel B is also given an index density. Therefore, the configuration is processed in thinning to be a configuration consisting of lower one pixel line except for the right end pixel.

As mentioned above, since a two pixel line is thinned to be one pixel line without generating a spike, the thinning performance is excellent. The process speed is high because one boundary layer is processed in an on process cycle.

In the embodiment above, one group in a binary image is processed. In the labeled image, each group can be independently processed or one of the groups can be selectively processed.

Hereafter, a neural network for processing sector data is described.

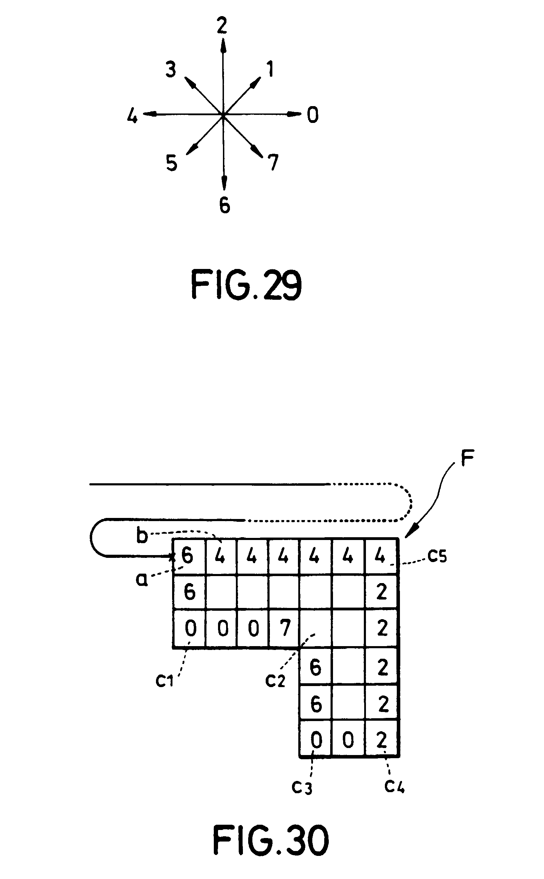

In Fig. 30, there is shown a configuration F. In order to give a chain code to this configuration, the start point is to be found first. On scanning to image along the ordinal scan line, the upper left pixel a is first found in the configuration F.

A chain code is generated anti-clockwise from the start point along the boundary. Each chain code indicates the direction to the following pixel from the current pixel. the current pixel means the pixel to which a chain code is to be given at that time.

Fig. 30 is a chain code diagram indicating a chain code on each boundary pixel when the boundary is traced in an anti-clockwise direction. In Fig. 2, the last pixel b adjacent to the start pixel a is given the chain code indicating the direction toward the pixel a.

On the other hand, as to the outer boundary, it is sometimes unnecessary to give the chain code to the last pixel. The chain code train in Fig. 2 is "66000766002222244444", which indicates a vertical downward line by "66", a horizontal rightward line by "00", a vertical upward line by "22" and horizontal leftward line by "44".

When the configuration of Fig. 30 is vectorized, the start pixel a, the pixel $c_1$, on the right angle convex corner beneath the pixel a, the pixel $c_2$ on the right angle concave corner rightward from the pixel $c_1$, the pixel $c_3$ on the right angle convex corner beneath the pixel $c_2$, the pixel $c_4$ on the right angle convex corner rightward from the pixel $c_3$ and the pixel $c_5$ on the right angle convex corner above the pixel $c_4$ should be extracted as vector points from the boundary pixels above, while the pixel on the right angle convex corner follows at least two pixels with the same chain code less by "2" than the chain code of the former. In this calculation, "0" is deemed to be the result of the addition of "6" and "2". It will be understood from the above that the chain code reflects the characteristics of boundary of a configuration. A right angle convex corner consisting of two inclined lines in Fig. 4 has a corner point b which follows at least two pixels with the same chain code less by "2" than the chain code of the former, similarly to the above.

However, the corner point $c_2$ on the right angle concave corner should be extracted as a vector point, the corner has a chain code because it is not a boundary pixel. This is one difficulty in vectorizing. The solution of this difficulty in accordance with the present invention is described later.

A chain code is ordinarily generated by tracing the boundary in the anti-clockwise direction with respect to the outer boundary. It may be possible to trace the boundary in a clockwise direction. With respect to the inner boundary, the tracing direction should be opposite to that of said boundary in order to define whether the boundary is an outer or inner boundary.

Hereafter, a description is made concerning the chain code anti-clockwise for an outer boundary and clockwise for an inner boundary.

When a pixel has a chain code of k, the chain code k' of the following pixel is as follows:

a) k is even number
$k' \neq (k-2)$ and $(k-3)$
b) k is odd number
$k' \neq (k-3)$
where k' is calculated under the modules of "7", therefore "0"-"2" = "6".

In Fig. 29, k' never becomes "1" and "2" when k=4. And k' never becomes "2" when k=5. Therefore, the chain code of one pixel limits the chain code of the following pixel.

As mentioned above, the pixel of the chain code is a pixel on the right angle convex corner when $k'=-(k+2)$.

It is, of course, selectable if all the points on the right angle convex corner are extracted as vector points or not. For example, only a corner point is extracted when the corner consists of two lines, both of which are longer than a predetermined length, such as more than 3 pixels. In this case, the corners "abc" and "def" are not defined as a right angle corner, so the pixels a, c, d and f are not extracted as vector points, while only the pixels b and e are extracted.

In the processing above, the corner point on the right angle concave corner is not yet processed.

Hereafter, a process for processing the right angle concave corner is to be described.

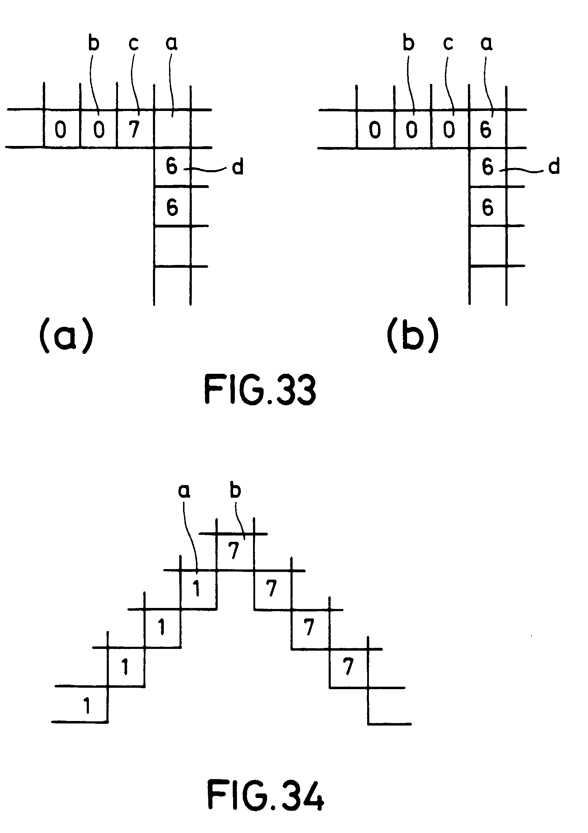

The right angle concave corner always consists of one vertical line and one horizontal line, as shown in Figs 33 (a), (b) and 34.

Fig. 33 (a) shows a corner opening downwardly as well as leftwardly. The chain code train advances "...007" on the horizontal line toward the corner point a, then changes "66..." on the vertical line. In the chain code train, the last two chain codes on the horizontal line together with the first chain code on the vertical line define the right angle corner. In Fig. 33 (a), the chain codes defining the right angle corner are "076". It means that there exists a left- and downwardly opening right angle corner when the chain codes "076" are included in the chain code train.

Fig. 33 (b) shows a chain code diagram in which the chain code train in Fig. 7 (a) is changed according to the present invention. In Fig. 7 (b), the last chain code on the horizontal line is changed from "7" to "0" and a new chain code "6" is appended after the changed chain code. Therefore, the chain code train "076" is modified to be "0066". By this modification, the last chain code c on the horizontal line indicates the corner point a, and the chain code on the corner point indicates the first pixel d on the vertical line.

The processing above is processing for the outer boundary. The processing for the inner boundary is described hereinafter.

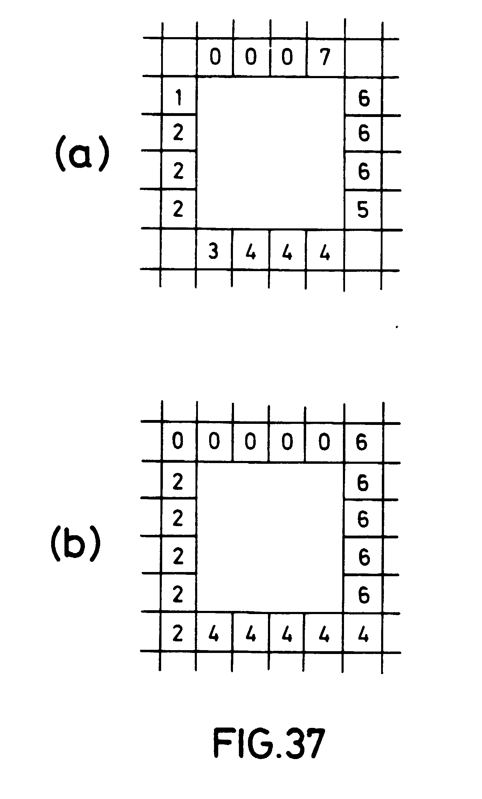

Fig. 37 (a) shows a chain code diagram of an inner boundary. The chain code train is "0007666544432221". When the last chain code of the train is deemed to be continued to the first thereof, the right angle corners are defined by the chain codes "076", "654", "432" or "210", similarly to the outer right angle corner.

The chain code trains are processed or modified similarly to the outer boundary, that is, "076" is changed to "0066", "654" is changed to "6644", "432" is changed to "4422" and "210" is changed to "2200", as shown in Fig. 8. In other words, the corner points a1, a2, a3 and a4 are given new chain codes, and the chain codes to which the corner points follow are changed from "7" to "0", "5" to "6", "3" to "4" or "1" to "2".

By the processing above, the outer as well as inner boundary is reappeared with respect to the right angle corner.

In the processing above, the right angle corner is detected by successive three chain codes. However, in some cases, such as stepwise boundary consisting of fine steps in Fig. 18, it may be better to reappear the boundary as a straight line. Therefore, it is possible to make a judgment of right angle corner when a straight line exists that is longer than a predetermined length continuous to each end of the 3 chain codes mentioned above. For example, a chain code train "00766" is deemed to define a right angle corner so as to be changed to "000666".

Hereafter, the second embodiment of clockwise chain code train is described.

Fig. 14 (a) shows a chain code diagram in which a clockwise chain code train is given to the configuration as in Fig. 8. In Fig. 37 (a), the right angle corner is defined by the chain codes "456". Fig. 37 (b) shows a modification of a chain code train from "456" to "4466". By the modification, the right angle corner can be clearly reappeared.

In order to generate a chain code, the start point has to be found first. The start point can be defined by the neighbor pixels in the relationship with the scan line direction.

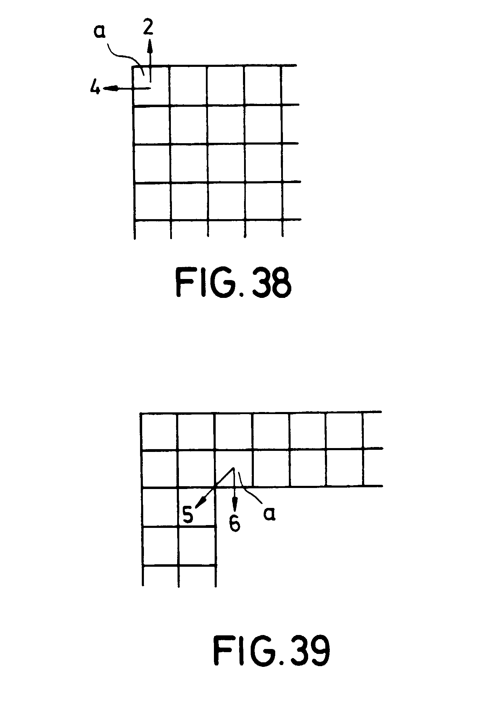

When the scan line is ordinal, that is, each scan line is generated after the upper scan line and advances rightwardly, the boundary pixel which does not have upper and left neighbors can be defined as the start point of the chain code on the outer boundary, as shown in Fig. 38. The boundary pixel a with lower left neighbor but without lower neighbor can be defined as the start point of the chain code on the inner boundary, as shown in Fig. 39.

In the chain code train "k, k'", the pixel of chain code "k'" can be extracted as a vector point. When the relationship between k and k' is as follows:

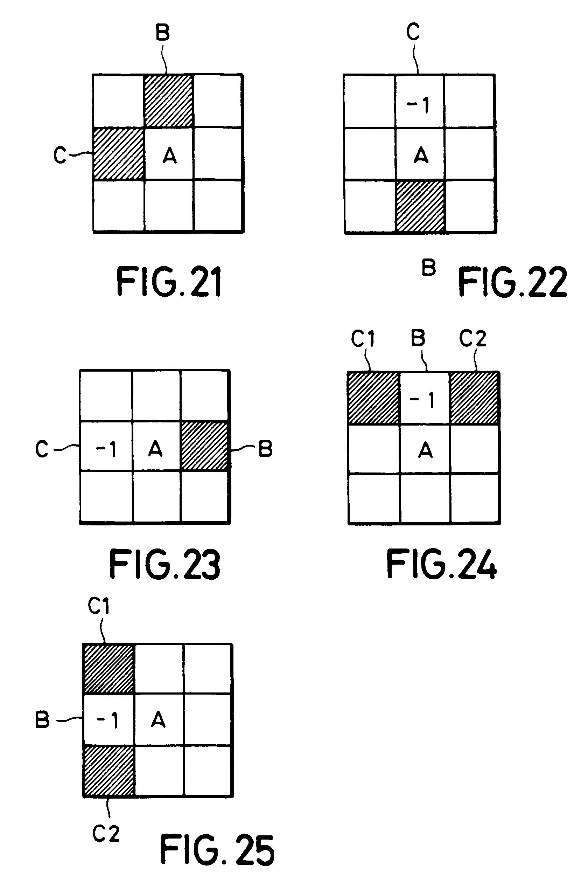

k=k' and k'= (k-1) When k'=(k-1) and one or more pixels of the chain code "k-1" follows the first pixel of "k-1", as shown in Fig. 23, it is better to omit all the pixels of "k-1" from vector points. Then the first pixel b of a chain code other than "k-1" after the chain code train of "k-1, k-1,..." should be extracted as a vector point.

In other words, the pixel of the chain code "k'" in the following chain code train should be extracted as a vector point. k, (k-1), (k-1),...,(k-1),k' where, k'≠k-1.

It is possible that the start point a is omitted according to the chain code train that the start point follows. However, the connecting point b should be extracted as a vector point.

In other words, when a constant chain code train is followed by a chain code train with constant chain codes, the pixel of the first chain code of the second line should be extracted as a vector point, as shown by the underline in the following chain code train.

k, k, ...k, k', k',...,k' where, k'≠k

A chain code train of constant chain codes defines a straight line in geometrical meaning. When two straight lines with different inclinations from each other are connected at the end points with each other, as shown in Fig. 24, both straight lines should be reappeared. In Fig. 24, a line of chain code train "5, 5 is followed by a line of chain code train "6, 6,...". The start point of the line of chain code "5" is a and the end point thereof is b.

Fig. 25 shows a one pixel concavity after a straight line of chain code "5". The bottom point of the concavity can be extracted by extracting a pixel with a chain code different from and after the constant chain codes defining a straight line.

Fig. 26 shows a two pixel straight line after a straight line with a chain code less by "1" than that of the first straight line. The chain code train may be explained as follows:

k, k,..., k, k-1, k'

where, k'≠k-1 In this case, the pixel a of the chain code "k-1" should be omitted from vector points. Nevertheless, the next pixel b of the chain code k' should be extracted as a vector point, as is mentioned concerning Figs. 22 and 23.

Fig. 27 shows a chain code diagram of a boundary consisting of two straight lines. The first line has chain codes of "5" and the second line has chain codes "4". The start point b of the second line should be extracted as a vector point. In other words, the pixel corresponding to the underlined chain code should be extracted in the following chain code train:

k,k,...,k, <u>k-1</u>, k-1,...,k-1

The rules above may be summarized as follows:

i) When k1, k2 and k3 are different chain codes from one another in the chain code train "k1, k2, k3"A
  if k2≠k1-1, k2 should be extracted as a vector point, and if k2=k-1, k3 should be extracted as a vector point.
ii) When k1 = k2, k2 = k3 and k3 = k1 in the chain code train "k1, k1,..., k1, k2, k3",
  if k2=k1-1, k2 should be extracted as a vector point, and if k2=k1-1, k3 should be extracted as a vector point.
iii) When k1≠k2, k2≠k2 and k3≠k1 in the chain code train "k1, k2, k2,..., k2, k3",
  if k2≠k1-1, k2 should be extracted as a vector point, and if k2=k1-1, k3 should be extracted as a vector point.
iv) when k1≠k2, k2≠k3 and k3≠k1 in the chain code train "k1, k1, ..., k1, k2, k2,..., k2, k3", k2 should be extracted as a vector point.

The next rule is further applicable for vectorizing in order to minimize the vector data.

v) As shown in Fig. 28, the chain code trains "445" exist repeatedly. These chain code trains define steps of constant period. The configuration may be approximated as one straight line. For this approximation, the following rule is to be applied. When chain code trains consisting of a combination of chain codes "k" and "k-1" or a chain code train consisting of a combination of chain codes "k" and "k+1" exist repeatedly, the first point of the first combination and the last point of the last combination are to be extracted as vector points, as shown in Fig. 28 by references a and b.

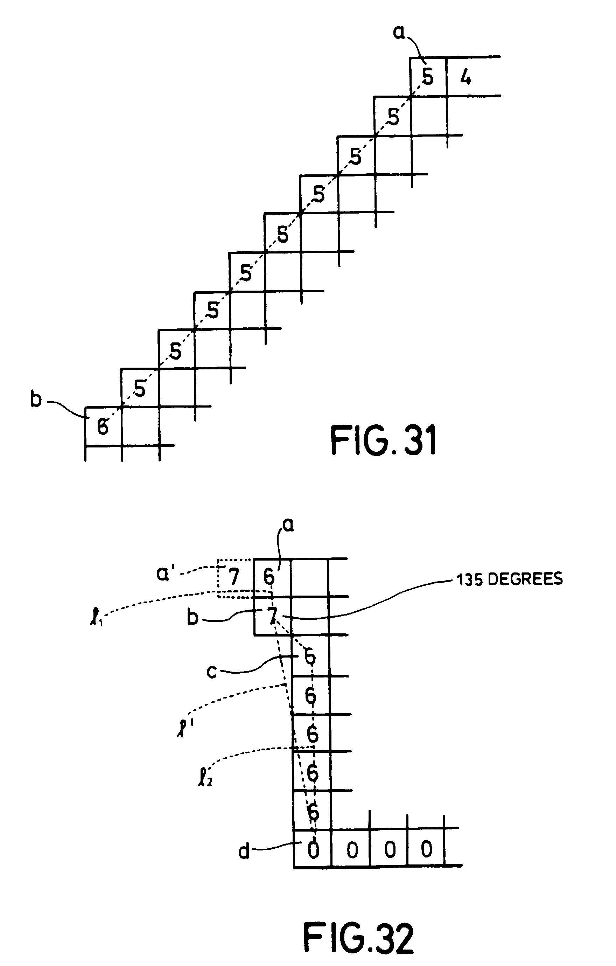

The configuration in Fig. 30 has the inclination opposite to the configuration of Fig. 28. The chain code trains "443" are repeatedly generated. The configuration in Fig 31 has the inclination opposite to the configuration of Fig. 29. The chain code trains "001" are repeatedly generated. In these configurations, the start point of the first step and the end point of the last step may be extracted as vector points so that the configuration is approximated as a straight line.

The above stepwise configurations have rather gradual inclination.

The configuration in Fig. 32 has repeated chain code trains of "665".

The configuration in Fig. 33 has repeated chain code trains of "667".

The configuration in Fig. 34 has repeated chain code trains of "223".

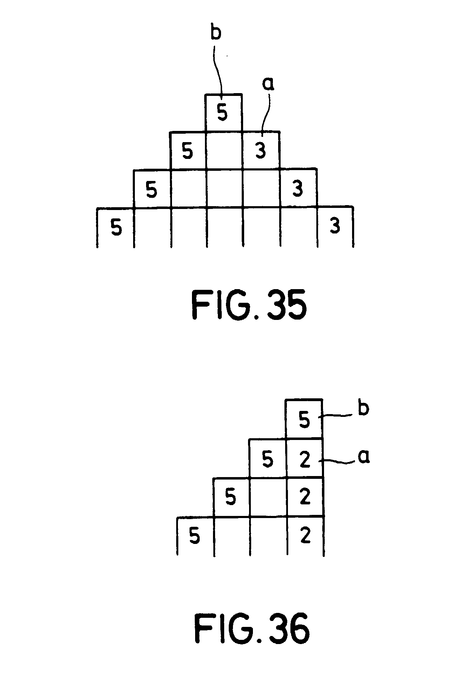

The configuration in Fig. 35 has repeated chain code trains of "221".

In each configuration of steep steps, the lower edge point of each step should be extracted when the boundary faces downwardly, and vice versa, as shown in Figs. 32 to 35.

The approximation rule for stepwise configuration is summarized as follows:

vi) In the chain code train consisting of repeated chain code trains of "k, k,..., k, k-1", the first pixel of "k" in the first chain code train and the first pixel of "k" in the last chain code train are to be extracted as vector points.
vii) In the chain code train consisting of repeated chain code trains of "k, k,..., k, k+1", the pixel of "k+1" in the first and last chain code trains are to be extracted as vector points.

The generalized rules are also applicable to vectorizing of a hole. When the chain code train is generated clockwise, oppositely to the above, the chain code changes in the chain code train should be reversely understood, that is, the increment and decrement are reversed.

When a code equivalent to a chain code is applied for vectorizing, the rules above can easily be modified.

As shown in the embodiments above, by extracting vector points according to the chain code or any other equivalent code, vector data can be easily generated without complex angular calculation. A high quality configuration can be reappeared from the vector data.

Although only a few exemplary embodiments of this invention have been described in detail above, those skilled in the art will readily appreciate that many modifications are possible in the exemplary embodiments without materially departing from the novel teachings and advantages of this invention.

Accordingly, all such modifications are intended to be included with the scope of this invention as defined in the following claims.

Hereafter, an embodiment using data of a density concurrent matrix is used.

In the circuit, two or more frame memories 330 are connected through a multi-plexer 311 to a comparator 4 and counter portion 5, successively. An output of the multi-plexer 3 is fed back to the frame memories 1 and 2.

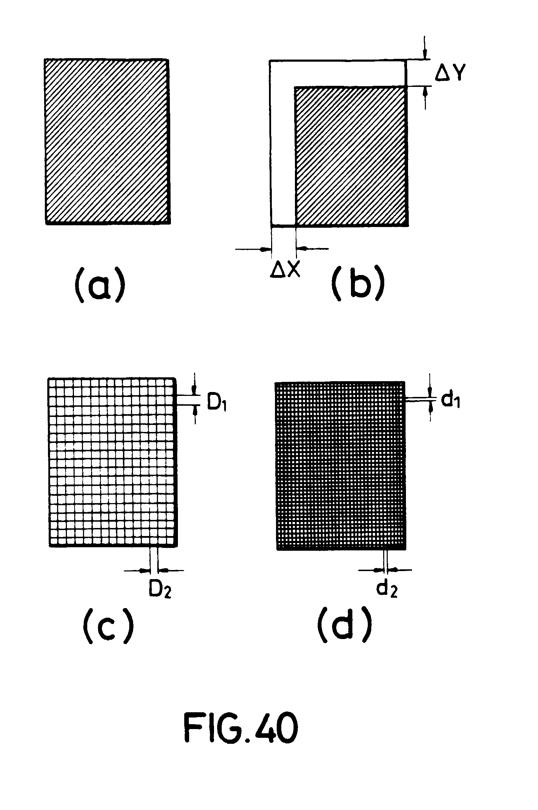

In the memory 330, an original image to be processed is storaged first. The original image is represented by Fig. 40 (a). When the distance of density concurrent matrix is (x, y), the original image is shifted by x in x direction and by y in the y direction and stored in the frame memory 2. In Fig. 40, positive x direction is rightward direction and positive y direction is downward. For shifting an image, reading timing from the frame memory 1 and writing timing to the frame memory 2 are shifted. And any other methods can be applied. The density of each pixel in the original image is successively transmitted to the comparator 4. The density of each pixel in the shifted image is successively transmitted to the counter portion 5, synchronously with the transmission of the density of the original image.

In the portion 325, a density $d_o$ to be processed is registered. The portion 325 outputs a signal F only when the density of the pixels in the original image coincides with $d_o$. F is called "objective pixel flag" hereinafter.

The portion 313 has an address input A and data input D/I. Data stored in an address designated by an address input a is increased by a value input from D/I.

The objective pixel flag F has a value of "1". which is input to D/i of the counter portion 5. It means that the counter 313 counts input times of each density from the shifted image. Therefore, density couples of $d_o$ and each of all densities are counted. It corresponds to the generation one column or one row of the density concurrent matrix. By changing $d_o$ to each of all densities, total elements of density concurrent matrix is calculated.

Usually the density concurrent matrix is generated according to an image diminished in graduation from an original image. In this case, $d_o$ is changed 15 times.

For a process of one column or one row, the total data of the frame memories 330 is input one time to the portion 325 and counter portion 313, respectively. It can be called one scan processing. In XXXXXXXXXXXXXXXXXXXXXXXXXXXXXX processing is performed in 16 scanning time.

A frame memory exists which reads and writes 512x512 pixels in 1/60sec.;0.016sec.

The following characteristics parameters are calculated from a density concurrent matrix,

$$\text{Contrast } x1(\delta):$$
$$x1(\delta) = \sum_m \sum_n (m-n)^2 P_\delta(m,n)$$

$$\text{Second moment } x2(\delta):$$
$$x2(\delta) = \sum_m \sum_n P_\delta(m,n)^2$$

$$\text{Correlation } x3(\xi):$$
$$x3(\delta) = (\sum_m \sum_n mn P_\delta(m,n) - \mu_m \mu_n) / (\delta_m \delta_n)$$

$$\mu_m = \sum_m m \sum_n P_\delta(m,n)$$

.......... Mean value of peripheral distribution in m direction;

$$\mu_n = \sum_n n \sum_m P_\delta(m,n)$$

......... Mean value of peripheral distribution in n direction;

$$\sigma^2_m = \sum_m (m-\mu_n)^2 \sum_n P_\delta(m,n)$$

......... Variance of peripheral distribution in m direction;

$$\sigma^2_n = \sum_n (n-\mu_n)^2 \sum_m P_\delta(m,n)$$

......... Variance of peripheral distribution in n direction;

It will be easily understood from the above formula that these calculations are very complex.

For evaluating a density concurrent matrix without executing complex calculations, a characteristics parameter has been invented by the present inventor.

For calculating the new parameter, a shifted image is generated, similar to the above processing, by a distance (x, y). Fig. 3 shows a circuit for the calculation. The circuit is similar to that in Fig. 1, but is different in that both data from the frame memories 1 and 2 are parallelly input to the comparator 4 to be compared. The comparator 4 outputs a comparison signal C. The signal C is "0" when both data coincide with each other, and is "1" when both data are different from each other. The comparison signal C is input to the data input D71 of the counter 5 which counts the value of the signal C. A constant value, for example, "0", is input to the address input A of the counter 5, so the total counted value is storaged in one address.

The original image in Fig. 2 (c) has rough checked pattern with horizontal pitch D2 and vertical pitch D1. On comparing the original image with the shifted image, the discordance ratio of both images has local minimum or becomes "0" when the shifting distance in x direction is a multiple of D2 and/or the shifting distance in y direction is a multiple of D1.

While in Fig. 2 (d), a fine checked image is shown with the pitch of d1 in y direction and d2 in x direction. On comparing the image in Fig. 2 (d) with the shifted image thereof, the discordance ratio becomes "0" or local minimum when the shifting distance in x direction is a multiple of d2 and/or the shifting distance in y direction is a multiple of d1.

As will be understood from the description above, the period of discordance ratio represents a texture characteristic. This period is independent from the density itself, rather it represents the roughness or fineness of the texture. It means that the human impression of a texture is quantitatively evaluated. Since the evaluation is performed by more simple calculation than the conventional parameters, the texture analysis is more easily executed.

Fig. 4 shows an example of the counter portion 5 in the above circuit. The counter portion 5 consists of a high speed memory 8 and a light computational portion 9 which is connected to the data output D out of the high speed memory 8. The high speed memory 8 consists of, for example, a static RAM (random access memory). The output of the light computational portion 9 is fed back through a selector 10 to the data input D/I of the high speed memory 8. The address input A of the counter 5 is connected to the address input Ain of the high speed memory 8. The data input D/I of the counter 5 is input as the data D3 of the light computational portion 9. When the high speed memory 8 is in read mode, the high speed memory 8 outputs data D storaged in the address D1 which is designated by the address input A. The data D is input to the light computational portion 9. The light computational portion can be defined as various computational modes. For the performance as a counter, the light computational portion 9 is defined as an adder. Therefore, D3 is added to D, then the additional result (D3 + D) is output from the light computational portion 9. The output value is input through the selector 10 to the data input Din of the high speed memory 8 and storaged in the address D1. Since D3 is "1", data in an address of the high speed memory 8 is increased by "1" in every process cycle.

The counter 5 has the same performances as the above by inputting constant "1" as D3 as well as inputting signal F or C to chip select terminal or chip enable terminal of the high speed memory 8.

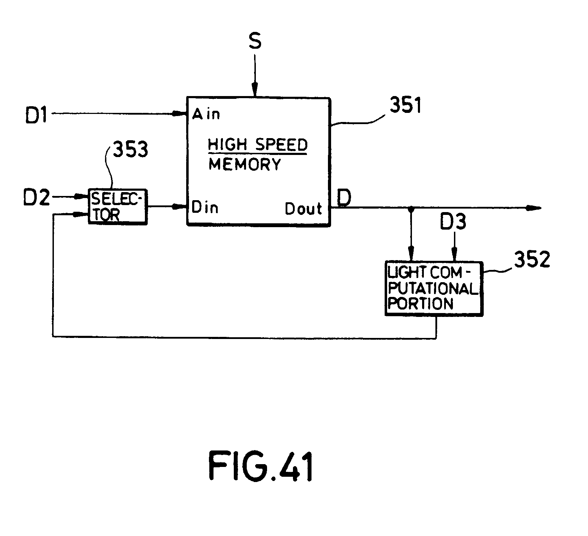

Fig 41 shows the second embodiment of the counter.

In Fig. 41, the counter consists of the high speed memory 351, the light computational portion 352 connected to the data output of the high speed memory, and the selector 353 is connected to the data input of the high speed memory 351. The output of the light computational portion 352 is transmitted to the input of the selector 353. A multi-plexer and a ratch may be successively connected between the high speed memory and the light computational portion.

Other characteristics values than the above, such as area, fillet-diameters, peripheral length, occupation ratio, circleness, complexity, Euler number, minimal length, maximal length and characteristics values of concavities are useful data for neural network.

## Claims

1. Data processing system comprising:

   an input portion (200) for inputting data;

   a feature extraction portion (300) for extracting features of the data; and

   a recognition portion (100) having a neural network for detecting a pattern of features, said network comprising:

   i) a first layer of neurons receiving input signals representative of the extracted features, each neuron of the first layer comprising an electronic apparatus producing an affirmative output signal when a sum of input signals to the neuron exceeds a threshold:

   ii) a second layer of neurons receiving outputs from neurons of the first neural layer as inputs, each neuron of the second layer comprising an electronic apparatus producing an affirmative output signal when a sum of adaptably weighted input signals to the neuron exceeds a threshold; and

iii) at least one subsequent layer of neurons receiving outputs from neurons of a preceding layer as inputs, each neuron of each subsequent layer comprising an electronic apparatus producing an affirmative output signal when a sum of adaptably weighted input signals to the neuron exceeds a threshold;

wherein the number of layers equals an abstraction degree of the features extracted by that feature extraction portion, said abstraction degree representing the number of logical operations including AND, OR and other logical operations, necessary to logically represent the characteristics of the extracted features,

wherein any logical AND or OR combination between logical combinations having a particular abstraction degree increases the abstraction degree by one.

2. Data processing system as claimed in Claim 1, wherein said data is an image data.

3. Data processing system as claimed in Claim 1, wherein said data is an acoustic data.

4. Data processing system as claimed in Claim 2, wherein said data is a thinned image data.

5. Data processing system as claimed in Claim 2, wherein said data is a vector data.

6. Data processing system as claimed in Claim 2, wherein said data is a characteristics of density coocurrence matrix.

7. A data processing system as claimed in Claim 2, wherein the feature extraction portion extracts a feature dependant on an amount of area covered by an image configuration.

8. Data processing system as claimed in Claim 2, wherein said data is a characteristics data according to Euler number.

9. A data processing system as claimed in Claim 2, wherein the feature extraction portion extracts a feature dependent upon a minimal width across an image configuration.

10. A data processing system as claimed in Claim 2, wherein the feature extraction portion extracts a feature dependant upon a maximal length segment across an image configuration.

11. A data processing system as claimed in Claim 2. wherein said data is a characteristics of concavities.

12. Data processing system as claimed in Claim 2, wherein said data is characteristics data in an image classified according to distances between nearest centroids.

13. Data processing system as claimed in Claim 3, wherein the feature extraction portion segments the acoustic data into phonemes according to the following steps:

(a) detecting concavities in an acoustic power sequence formed from the acoustic signal; and
(b) segmenting the acoustic power sequence according to concavities with depth deeper than a predetermined value.

14. A data processing system as claimed in Claim 3, wherein the feature extraction portion extracts a phenome signal from background noise according to the following steps:

(a) generating a binary sequence by applying a threshold to an acoustic power sequence formed from the acoustic signal ;
(b) generating an integrated sequence by integrating the binary sequence; and
(c) differentiating the integrated sequence.

15. Data processing system as claimed in Claim 3, comprising:

an input portion for outputting digital data in response to inputted analogue data;

a serial/parallel converter for holding said digital data and for outputting a plurality of said data in parallel;

a computational portion for calculating deferential and average of said data output from said serial/parallel converter; and

a converting portion having a memory and a light computational portion connected between an input and output of said memory, said memory is used as a table and a register, said light computational portion is used as an adder for adding a registered value and others and for feeding added data to said memory.

**16.** Data processing system as claimed in Claim 15, wherein said input portion outputs a logarithmic data of said digital data.

**Patentansprüche**

**1.** Datenverarbeitungssystem umfassend:

einen Eingangsabschnitt (200) zum Eingeben von Daten;

einen Merkmalgewinnungsabschnitt (300) zum Gewinnen von Merkmalen der Daten; und

einen Erkennungsabschnitt (100), der ein neurales Netz zum Bestimmen eines Musters von Merkmalen hat, wobei das genannte Netz umfaßt:

i) eine erste Schicht aus Neuronen, die Eingangssignale erhalten, die für die gewonnenen Merkmale repräsentativ sind, wobei jedes Neuron der ersten Schicht eine elektronische Vorrichtung umfaßt, die ein affirmatives Ausgangssignal erzeugt, wenn eine Summe von Eingangssignalen zu dem Neuron eine Schwelle überschreitet;

ii) eine zweite Schicht aus Neuronen, die Ausgänge von Neuronen der ersten, neuralen Schicht als Eingänge erhalten, wobei jedes Neuron der zweiten Schicht eine elektrische Vorrichtung umfaßt, die ein affirmatives Ausgangssignal erzeugt, wenn eine Summe von adaptiv gewichteten Eingangssingalen zu dem Neuron eine Schwelle überschreitet; und

iii) wenigstens eine nachfolgende Schicht aus Neuronen, die Ausgänge von Neuronen einer vorhergehenden Schicht als Eingänge erhalten, wobei jedes Neuron jeder nachfolgenden Schicht eine elektrische Vorrichtung umfaßt, die ein affirmatives Ausgangssignal erzeugt, wenn eine Summe adaptiv, gewichteter Eingangssingalen zu dem Neuron eine Schwelle überschreitet;

worin die Anzahl der Schichten gleich einem Abstraktionsgrad der Merkmale ist, die durch den genannten Merkmalsgewinnungsabschnitt gewonnen sind, wobei der genannte Abstraktionsgrad die Anzahl von logischen Operationen einschließlich UND, ODER oder anderer logischer Operationen darstellt, die notwendig sind, logisch die Eigenschaften der gewonnenen Merkmale darzustellen,

worin irgendeine logische UND oder ODER Kombination zwischen logischen Kombinationen mit einem bestimmten Abstraktionsgrad den Abstraktionsgrad um eins erhöht.

**2.** Datenverarbeitungssystem, wie in Anspruch 1 beansprucht, worin die genannte Date ein Bilddate ist.

**3.** Datenverarbeitungssystem, wie in Anspruch 1 beansprucht, worin die genannte Date eine akustische Date ist.

**4.** Datenverarbeitungssystem, wie in Anspruch 2 beansprucht, worin die genannte Date eine ausgedünnte Bilddate ist.

**5.** Datenverarbeitungssystem, wie in Anspruch 2 beansprucht, worin die genannte Date eine Vektordate ist.

**6.** Datenverarbeitungssystem, wie in Anspruch 2 beansprucht, worin die genannte Date eine Charakteristik einer Dichte-Verzahnungsmatrix ist.

**7.** Ein Datenverarbeitungssystem, wie in Anspruch 2 beansprucht, worin der Merkmalgewinnungsabschnitt ein Merkmal in Abhängigkeit von der Größe eines Bereiches gewinnt, die von einer Bildkonfiguration überdeckt ist.

8. Datenverarbeitungssystem, wie in Anspruch 2 beansprucht, worin die genannte Date eine charakteristische Date gemäß der Euler'schen Zahl ist.

9. Datenverarbeitungssystem, wie in Anspruch 2 beansprucht, worin der Merkmalgewinnungsabschnitt ein Merkmal in Abhängigkeit von einer minimalen Weite über eine Bildkonfiguration sind.

10. Ein Datenverarbeitungssystem, wie in Anspruch 2 beansprucht, worin der Merkmalgewinnungsabschnitt ein Merkmal in Abhängigkeit von einem maximalen Längenabschnitt über eine Bildkonfiguration gewinnt.

11. Ein Datenverarbeitungssystem, wie in Anspruch 2 beansprucht, worin die genannte Date ein Charakteristikum von Konkavitäten ist.

12. Datenverarbeitungssystem, wie in Anspruch 2 beansprucht, worin die genannte Date eine charakteristische Date in einem Bild ist, das gemäß den Abständen zwischen den nahesten Flächenschwerpunkten klassifiziert ist.

13. Datenverarbeitungssystem, wie in Anspruch 3 beansprucht, worin der Merkmalgewinnungsabschnitt die akustische Date in Phoneme gemäß den folgenden Schritten unterteilt:

    (a) Bestimmen von Konkavitäten in einer akustischen Potenzfolge, die von dem akustischen Signal gebildet wird; und

    (b) Unterteilen der akustischen Potenz folge gemäß Konkavitäten mit einer Tiefe, die tiefer als ein vorbestimmter Wert ist.

14. Ein Datenverarbeitungssystem, wie in Anspruch 3 beansprucht, worin der Merkmalgewinnungsabschnitt ein Phonemsignal von Hintergrundrauschen gemäß den folgenden Schritten gewinnt:

    (a) Erzeugen einer Binärfolge durch Anwenden einer Schwelle auf eine akustische Potenzfolge, die aus dem akustischen Signal gebildet wird:

    (b) Erzeugen einer integrierten Folge durch Integrieren der binären Folge; und

    (c) Differenzieren der integrierten Folge.

15. Datenverarbeitungssystem, wie in Anspruch 3 beansprucht, umfassend:

    einen Eingangsabschnitt zum Ausgeben digitaler Daten in Reaktion auf eingegebene, analoge Daten;

    einen seriellen/parallelen Wandler zum Halten der genannten digitalen Daten und zum parallelen Ausgeben einer Mehrzahl der genannten Daten;

    einen Berechnungsabschnitt zum Berechnen der Differenz und des Mittels der genannten Daten, die von dem genannten seriellen/parallelen Wandler ausgegeben werden;

    einen Umwandlungsabschnitt, der einen Speicher und einen leichten Berechnungsabschnitt hat, der zwischen einem Eingang und einem Ausgang des genannten Speichers verbunden sind, wobei der genannte Speicher als eine Tabelle und ein Register verwendet wird, wobei der genannte leichte Berechnungsabschnitt als ein Addierer zum Addieren eines aufgezeichneten Werts und anderer und zum Zuführen der addierten Daten zu dem genannten Speicher verwendet wird.

16. Datenverarbeitungssystem, wie in Anspruch 15 beansprucht, worin der genannte Eingangsabschnitt logarithmische Daten der genannten digitalen Daten ausgibt.

# EP 0 457 909 B1

**Revendications**

1. Système de traitement de données comprenant :

   une partie d'entrée (200) pour entrer des données ;
   une partie d'extraction de caractéristiques (300) pour extraire les caractéristiques des données ; et
   une partie de reconnaissance (100) comportant un réseau neuromimétique pour détecter un modèle de caractéristiques, ledit réseau comprenant :

   i) une première couche de neurones destinés à recevoir des signaux d'entrée représentatifs des caractéristiques extraites, chaque neurone de la première couche étant composé d'un appareil électronique produisant un signal de sortie affirmatif quand une somme des signaux d'entrée dans le neurone excède un seuil ;
   ii) une deuxième couche de neurones destinés à recevoir les signaux de sortie provenant des neurones de la première couche neuronale sous forme d'entrées, chaque neurone de la deuxième couche étant composé d'un appareil électronique produisant un signal de sortie affirmatif quand une somme des signaux d'entrée dûment pondérés dans le neurone excède un seuil ; et
   iii) une moins une couche consécutive de neurones destinés à recevoir les signaux de sortie provenant des neurones d'une couche précédente sous forme d'entrées, chaque neurone de chaque couche consécutive étant composé d'un appareil électronique produisant un signal de sortie affirmatif quand une somme des signaux d'entrée dûment pondérés dans le neurone excède un seuil ;

   dans lequel le nombre de couches correspond à un degré d'abstraction des caractéristiques extraites par cette partie d'extraction de caractéristiques, ledit degré d'abstraction représentant le nombre d'opérations logiques comprenant les opérations ET, OU et d'autres opérations logiques, nécessaires pour représenter logiquement les particularités des caractéristiques extraites,
   dans lequel toute combinaison ET ou OU logique entre des combinaisons logiques ayant un degré d'abstraction particulier augmente le degré d'abstraction de un.

2. Système de traitement de données selon la revendication 1, dans lequel lesdites données sont des données d'image.

3. Système de traitement de données selon la revendication 1, dans lequel lesdites données sont des données acoustiques.

4. Système de traitement de données selon la revendication 2, dans lequel lesdites données sont des données d'image réduite.

5. Système de traitement de données selon la revendication 2, dans lequel lesdites données sont des données vectorielles.

6. Système de traitement de données selon la revendication 2, dans lequel lesdites données sont une caractéristique de matrice de co-occurrence de densité.

7. Système de traitement de données selon la revendication 2, dans lequel la partie d'extraction de caractéristiques extrait une caractéristique dépendant d'une quantité de surface couverte par une configuration d'image.

8. Système de traitement de données selon la revendication 2, dans lequel lesdites données sont des données de caractéristiques selon le nombre d'Euler.

9. Système de traitement de données selon la revendication 2, dans lequel la partie d'extraction de caractéristiques extrait une caractéristique dépendant d'une largeur minimale sur la totalité d'une configuration d'image.

10. Système de traitement de données selon la revendication 2, dans lequel la partie d'extraction de caractéristiques extrait une caractéristique dépendant d'un segment de longueur maximale sur la totalité d'une configuration d'image.

11. Système de traitement de données selon la revendication 2, dans lequel lesdites données sont une caractéristique de concavités.

12. Système de traitement de données selon la revendication 2, dans lequel lesdites données sont des données de caractéristiques dans une image classée selon les distances entre les centres de gravité les plus proches.

13. Système de traitement de données selon la revendication 3, dans lequel la partie d'extraction de caractéristiques segmente les données acoustiques en phonèmes selon les étapes suivantes :

(a) détection des concavités dans une séquence d'intensité acoustique formée à partir d'un signal acoustique ; et
(b) segmentation de la séquence d'intensité acoustique selon les concavités ayant une profondeur supérieure à une valeur prédéterminée.

14. Système de traitement de données selon la revendication 3, dans lequel la partie d'extraction de caractéristiques extrait un signal de phonème à partir d'un bruit de fond selon les étapes suivantes :

(a) génération d'une séquence binaire en appliquant un seuil à une séquence d'intensité acoustique formée à partir du signal acoustique ;
(b) génération d'une séquence intégrée en intégrant la séquence binaire ; et (c) différenciation de la séquence intégrée.

15. Système de traitement de données selon la revendication 3, comprenant :

une partie d'entrée pour générer des données numériques en sortie, en réponse aux données analogiques appliquées en entrée ;
un convertisseur série/parallèle pour maintenir lesdites données numériques et pour générer en sortie une pluralité desdites données en parallèle ;
une partie de calcul pour calculer l'écart et la moyenne desdites données générées par ledit convertisseur série/parallèle ; et
une partie de conversion dotée d'une mémoire et d'une partie de calcul simplifié connectée entre une entrée et une sortie de ladite mémoire, ladite mémoire étant utilisée comme une table et comme un registre, ladite partie de calcul simplifié étant utilisée comme un additionneur pour additionner une valeur contenue dans le registre et d'autres valeurs et pour charger les données additionnées dans ladite mémoire.

16. Système de traitement de données selon la revendication 15, dans lequel ladite partie d'entrée génère en sortie des données logarithmiques desdites données numériques.

FIG.1

FIG.2

FIG.3

EP 0 457 909 B1

FIG.4

FIG.5

(a)

FIG.6

FIG.6

FIG.7

FIG.7

FIG. 8

(a)

(b)

FIG.9

(a)

(b)

FIG.10

FIG.11

FIG.12

FIG.13

FIG.14

FIG.15

FIG.16

FIG.17

**FIG.18**

**FIG.19**

**FIG.20**

FIG.21

FIG.22

FIG.23

FIG.24

FIG.25

**(a)**

**(b)**

**FIG. 26**

**(a)**

**(b)**

**FIG. 27**

**(a)**

**(b)**

**FIG. 28**

FIG.29

FIG.30

FIG.31

FIG.32

(a)

(b)

FIG.33

FIG.34

FIG. 35

FIG. 36

(a)

|   | 0 | 0 | 0 | 7 |   |
|---|---|---|---|---|---|
| 1 |   |   |   |   | 6 |
| 2 |   |   |   |   | 6 |
| 2 |   |   |   |   | 6 |
| 2 |   |   |   |   | 5 |
|   | 3 | 4 | 4 | 4 |   |

(b)

| 0 | 0 | 0 | 0 | 0 | 6 |
| 2 |   |   |   |   | 6 |
| 2 |   |   |   |   | 6 |
| 2 |   |   |   |   | 6 |
| 2 |   |   |   |   | 6 |
| 2 | 4 | 4 | 4 | 4 | 4 |

# FIG.37

FIG. 38

FIG. 39

FIG.40

S

D1 → | A in

353

HIGH SPEED
MEMORY

351

D2 → SELEC-
TOR
Din                    Dout    D

LIGHT COM-
PUTATIONAL
PORTION

D3

352

# FIG.41

FIG.42

FIG.43

FIG.44

FIG.45

56

FIG. 46

**FIG.47**

**FIG.48**

**FIG.49**

FIG.50

| QUADRANT | TOP POINTS OF GONEX HULL | X-COOR-DINATE | Y-COOR-DINATE | CHAIN CODE |
|---|---|---|---|---|
| I | O | $X_1$ | $Y_1$ | $C_1$ |
| I | X | $X_2$ | $Y_2$ | $C_2$ |
| ⋮ | ⋮ | ⋮ | ⋮ | ⋮ |
| II | O | $X_k$ | $Y_k$ | $C_k$ |
| ⋮ | ⋮ | ⋮ | ⋮ | ⋮ |
| IV | O | $X_n$ | $Y_n$ | $C_n$ |

FIG.51

FIG.52

FIG.53

FIG.54

FIG.55

$$\begin{array}{|c|c|}
\hline
Y_1 & X_1 \\
Y_2 & X_2 \\
Y_3 & X_3 \\
\vdots & \vdots \\
Y_n & X_n \\
\hline
\end{array}$$

# FIG.56

$$\begin{array}{cc}
\vdots & \vdots \\
Y_k & X_k \\
Y_{k+1} & X_{k+1} \\
Y_{k+2} & X_{k+2} \\
Y_{k+3} & X_{k+3} \\
Y_{k+4} & X_{k+4} \\
Y_{k+5} & X_{k+5} \\
Y_{k+6} & X_{k+6} \\
\vdots & \vdots \\
\end{array}$$

REFERENCE
CONFIGURATION

# FIG.57